# EUROPEAN PATENT APPLICATION

(11) **EP 4 794 400 A1**
(43) Date of publication of application: **19.08.2026**
(21) Application number: 24884397.1
(22) Date of filing: 11.10.2024
(51) Int. Cl.: H04W 48/18

(54) **SESSION HANDLING METHOD AND COMMUNICATION APPARATUS**

(30) Priority: 31.10.2023 CN 202311447581
(71) Applicant: HUAWEI TECHNOLOGIES CO., LTD., Shenzhen 518129 (CN)
(72) Inventor: XU, Shengfeng, Shenzhen, Guangdong 518129 (CN)
(74) Representative: Isarpatent
(86) International application number: PCT/CN2024/124268
(87) International publication number: WO 2025/092393

(57) **Abstract**

This application provides a session processing method and a communication apparatus, applied to a scenario where a UE accesses a network via a first access network device and a second access network device, both of which are of the 3GPP access type. The method includes: The UE receives policy information indicating that a service data flow is to be transmitted via an access network device corresponding to the 3GPP access type. The UE determines a target access network device from the first access network device and the second access network device based on information about the access network devices, and then the UE sends a first message via the target access network device. The first message is for requesting to establish a session corresponding to the service data flow or for modifying an existing session on the target access network device to support transmission of the service data flow. This method enables the UE, when accessing a network via two 3GPP access network devices, to reasonably select one of them for transmission of the service data flow.

## Description

This application claims priority to Chinese Patent Application No. 202311447581.9, filed with the China National Intellectual Property Administration on October 31, 2023 and entitled "SESSION PROCESSING METHOD AND COMMUNICATION APPARATUS", which is incorporated herein by reference in its entirety.

### TECHNICAL FIELD

This application relates to the field of communication technologies, and in particular, to a session processing method and a communication apparatus.

### BACKGROUND

A user equipment (user equipment, UE), a radio access network (radio access network, RAN), a user plane function (user plane function, UPF), and a data network (data network, DN) are generally referred to as data plane network functions and entities. User data traffic may be transmitted by using a protocol data unit (protocol data unit, PDU) established between the UE and the DN, via two network function entities: the RAN and the UPF. The UE may obtain a UE route selection policy (UE route selection policy, URSP) from a policy control function (policy control function, PCF) network element. The URSP includes an access type (Access Type) corresponding to a service data flow (service data flow, SDF), and the access type may be 3GPP access (3GPP Access), non-3GPP access (Non-3GPP Access), or multi-access (Multi-Access). The UE establishes a PDU session for that service on a corresponding access node based on the access type (Access Type) corresponding to the service data flow.

With development of communication technologies, future UEs may support simultaneous connections to two access network devices of the 3GPP access type. With a single subscriber identity module (subscriber identity module, SIM) card installed, a UE can maintain radio resource control (radio resource control, RRC) signaling connections to two 3GPP access network devices and transmit service data through both. In other words, the UE accesses a network via two 3GPP access network devices. In such cases, if a service data flow needs to be transmitted via a 3GPP access network device, the UE cannot properly select one of the 3GPP access network devices for transmission.

### SUMMARY

This application provides a session processing method and a communication apparatus to enable a UE, when accessing a network via two 3GPP access network devices, to reasonably select one of them for transmission of a service data flow.

According to a first aspect, this application provides a session processing method, applied to a scenario in which a user equipment UE accesses a network via access network devices, where the access network devices include a first access network device and a second access network device, and the first access network device and the second access network device are of a 3rd generation partnership project 3GPP access type. The method includes:

The UE receives policy information, where the policy information indicates that a service data flow is to be transmitted via an access network device corresponding to the 3GPP access type. The UE determines a target access network device from the first access network device and the second access network device based on information about the access network devices. The UE sends a first message via the target access network device, where the first message is for requesting to establish a session corresponding to the service data flow or for modifying an existing session on the target access network device to support transmission of the service data flow.

It can be learned that, according to the method described in the first aspect, when the UE accesses the network via two 3GPP access network devices, if the service data flow needs to be transmitted via a 3GPP access network device, the UE may properly select, based on information about the two 3GPP access network devices, one of the two 3GPP access network devices for transmission of the service data flow.

In a possible embodiment, the information about the access network devices includes one or more of the following: an air interface signal status between the access network device and the UE, load information of the access network device, slice information supported by the access network device, a radio access technology type supported by the access network device, a service type supported by the access network device, and frequency information supported by the access network device.

Determining, based on the air interface signal status between the access network device and the UE, the target access network device configured to transmit the service data flow helps ensure signal transmission quality of the service data flow. Determining, based on the load information of the access network device, the target access network device configured to transmit the service data flow helps implement load balancing between access network devices. Determining, based on the slice information supported by the access network device, the target access network device configured to transmit the service data flow helps meet a slice requirement of the service data flow. Determining, based on the radio access technology type supported by the access network device, the target access network device configured to transmit the service data flow helps meet a radio access technology type requirement. Determining, based on the service type supported by the access network device, the target access network device configured to transmit the service data flow helps meet a service type requirement of the service data flow. Determining, based on the frequency information supported by the access network device, the target access network device configured to transmit the service data flow helps meet a transmission performance requirement of the service data flow.

In a possible embodiment, the information about the access network devices includes the air interface signal status between the access network device and the UE; and the target access network device is an access network device that is from the first access network device and the second access network device and that has a better air interface signal status.

In a possible embodiment, the information about the access network devices includes the load information of the access network device; and the target access network device is an access network device that is from the first access network device and the second access network device and that has a lower load.

In a possible embodiment, the information about the access network devices includes the slice information supported by the access network device; the policy information further indicates the slice information corresponding to the service data flow; and the target access network device is an access network device that is from the first access network device and the second access network device and that supports the slice information corresponding to the service data flow.

In a possible embodiment, the information about the access network devices includes the radio access technology type supported by the access network device; the policy information further indicates a radio access technology type corresponding to the service data flow; and the target access network device is an access network device that is from the first access network device and the second access network device and that supports the radio access technology type corresponding to the service data flow.

Optionally, before the UE receives the policy information, the UE may further send first indication information, where the first indication information indicates that the UE supports connections to the network via two 3GPP access network devices, and the first indication information is for generating the policy information.

For example, the UE may send the first indication information to a first network element over an access network. The first network element may send the first indication information to a PCF network element. In this way, after receiving the first indication information, the PCF network element may generate, based on the first indication information, the policy information indicating the radio access technology type corresponding to the service data flow.

Based on the optional manner, a network side may determine, based on whether the UE supports connections to the network via two 3GPP access network devices, whether to generate the policy information indicating the radio access technology type corresponding to the service data flow, and may generate a policy more flexibly based on an actual requirement.

In a possible embodiment, the UE may further receive second indication information, where the second indication information indicates a radio access technology type that supports a first service or a radio access technology type that does not support the first service, where the service data flow is a data flow of the first service; the information about the access network devices includes the radio access technology type supported by the access network device; and the target access network device is an access network device that is from the first access network device and the second access network device and whose radio access technology type supports the first service.

In a possible embodiment, the service data flow is a data flow of a first service; the information about the access network devices includes the service type supported by the access network device; and the target access network device is an access network device that is from the first access network device and the second access network device and that supports the first service.

In a possible embodiment, the first service is an emergency service or a voice service.

According to a second aspect, this application provides a session processing method, applied to a scenario in which a user equipment UE accesses a network via access network devices, where the access network devices include a first access network device and a second access network device, the first access network device and the second access network device are of a 3rd generation partnership project 3GPP access type, and the network includes a first network element. The method includes:

The first network element receives a first message sent by the UE via a target access network device, where the first message is for requesting to establish a session corresponding to a service data flow or for modifying an existing session on the target access network device to support transmission of the service data flow; the service data flow is to be transmitted via an access device corresponding to the 3GPP access type; and the target access network device is one of the first access network device and the second access network device. The first network element stores an association relationship between an identifier of the session and first information, where the association relationship is used by the first network element to send information associated with the session to the target access network device; and the first information is an identifier of the target access network device; or the first information is a radio access technology supported by the target access network device, and a radio access technology type supported by the first access network device is different from a radio access technology type supported by the second access network device.

It can be learned that, according to the method described in the second aspect, the first network element stores the association relationship between the identifier of the session and the first information. In this way, the target access network device corresponding to the session can be accurately identified subsequently, and the information associated with the session can be sent to the target access network device.

In a possible embodiment, the first network element may further receive the identifier of the session and the information associated with the session that are sent by a second network element. The first network element sends, based on the association relationship, the information associated with the session to the target access network device. According to the possible embodiment, the information associated with the session can be accurately sent to an access network device on which the session is located.

In a possible embodiment, that the first network element stores the association relationship between the identifier of the session and the first information includes:

The first network element stores the association relationship between the identifier of the session and the first information if the UE is connected to the first network element via the first access network device and the second access network device.

In a possible embodiment, that the first network element stores the association relationship between the identifier of the session and the first information includes:

The first network element stores the association relationship between the identifier of the session and the first information if the UE supports connections to the network via two 3GPP access network devices or the network allows the UE to connect via two 3GPP access network devices. In this way, the target access network device corresponding to the session can be accurately identified subsequently, and the information associated with the session can be sent to the target access network device.

In a possible embodiment, the identifier of the target access network device is a cell identifier corresponding to the target access network device, or the identifier of the target access network device is an identifier allocated by the target access network device to the UE in a connection between the target access network device and the first network element.

According to a third aspect, this application provides a session processing method, applied to a scenario in which a user equipment UE accesses a network via access network devices, where the access network devices include a first access network device and a second access network device, the first access network device and the second access network device are of a 3rd generation partnership project 3GPP access type, and the network includes a first network element. The method includes:

The first network element receives a second message sent by the UE via the first access network device or the second access network device, where the second message is for requesting to establish a session corresponding to a service data flow; and the service data flow is to be transmitted via an access device corresponding to the 3GPP access type. The first network element determines a target access network device from the first access network device and the second access network device based on information about the access network devices. The first network element sends a third message to the target access network device, where the third message is for requesting the target access network device to allocate an air interface resource to the session.

It can be learned that, according to the method described in the third aspect, when the UE accesses the network via two 3GPP access network devices, if the service data flow needs to be transmitted via a 3GPP access network device, the first network element may properly select, based on information about the two 3GPP access network devices, one of the two 3GPP access network devices for transmission of the service data flow.

In a possible embodiment, the information about the access network devices includes one or more of the following: an air interface signal status between the access network device and the UE, load information of the access network device, slice information supported by the access network device, a radio access technology supported by the access network device, a service type supported by the access network device, and frequency information supported by the access network device.

Determining, based on the air interface signal status between the access network device and the UE, the target access network device configured to transmit the service data flow helps ensure signal transmission quality of the service data flow. Determining, based on the load information of the access network device, the target access network device configured to transmit the service data flow helps implement load balancing between access network devices. Determining, based on the slice information supported by the access network device, the target access network device configured to transmit the service data flow helps meet a slice requirement of the service data flow. Determining, based on the radio access technology type supported by the access network device, the target access network device configured to transmit the service data flow helps meet a radio access technology type requirement. Determining, based on the service type supported by the access network device, the target access network device configured to transmit the service data flow helps meet a service type requirement of the service data flow. Determining, based on the frequency information supported by the access network device, the target access network device configured to transmit the service data flow helps meet a transmission performance requirement of the service data flow.

In a possible embodiment, the information about the access network devices includes the air interface signal status between the access network device and the UE; and the target access network device is an access network device that is from the first access network device and the second access network device and that has a better air interface signal status.

In a possible embodiment, the information about the access network devices includes the load information of the access network device; and the target access network device is an access network device that is from the first access network device and the second access network device and that has a lower load.

In a possible embodiment, the information about the access network devices includes the slice information supported by the access network device; and the target access network device is an access network device that is from the first access network device and the second access network device and that supports a slice corresponding to the service data flow.

In a possible embodiment, the information about the access network devices includes the radio access technology type supported by the access network device; and the target access network device is an access network device that is from the first access network device and the second access network device and that supports a radio access technology type corresponding to the service data flow.

In a possible embodiment, the service data flow is a data flow of a first service; the information about the access network devices includes the radio access technology type supported by the access network device; and the target access network device is an access network device that is from the first access network device and the second access network device and whose radio access technology type supports the first service.

In a possible embodiment, the service data flow is a data flow of a first service; the information about the access network devices includes the service type supported by the access network device; and the target access network device is an access network device that is from the first access network device and the second access network device and that supports the first service.

In a possible embodiment, the first service is an emergency service or a voice service.

In a possible embodiment, the second message carries third indication information, where the third indication information indicates that an access network can be modified.

According to the possible embodiment, the first network element may determine, based on the third indication information, whether the access network can be modified, so that the first network element can establish a session more flexibly.

In a possible embodiment, that the first network element determines the target access network device from the first access network device and the second access network device based on the information about the access network devices includes: The first network element sends the information about the access network devices to a second network element. The first network element receives fourth indication information sent by the second network element, where the fourth indication information indicates the target access network device configured to establish a session.

In a possible embodiment, the first network element may further store an association relationship between an identifier of the session and first information, where the association relationship is used by the first network element to send information associated with the session to the target access network device; and the first information is an identifier of the target access network device; or the first information is a radio access technology type supported by the target access network device, and a radio access technology type supported by the first access network device is different from a radio access technology type supported by the second access network device.

According to the possible embodiment, the target access network device corresponding to the session can be accurately identified subsequently, and the information associated with the session can be sent to the target access network device.

In a possible embodiment, the identifier of the target access network device is a cell identifier corresponding to the target access network device, or the identifier of the target access network device is an identifier allocated by the target access network device to the UE in a connection between the target access network device and the first network element.

According to a fourth aspect, this application provides a session processing method, applied to a scenario in which a user equipment UE accesses a network via access network devices, where the access network devices include a first access network device and a second access network device, the first access network device is a 3GPP access network device in a first public land mobile network PLMN, the second access network device is a 3GPP access network device in a second PLMN, and the first PLMN is different from the second PLMN. The method includes:

The UE receives fifth indication information, where the fifth indication information indicates one or more PLMNs corresponding to a service data flow; and the service data flow is to be transmitted via an access device corresponding to a 3GPP access type. The UE determines a target PLMN from the first PLMN and the second PLMN based on the fifth indication information. The UE sends a first message via a target access network device, where the first message is for requesting to establish a session corresponding to the service data flow or for modifying an existing session on the target access network device to support transmission of the service data flow; and the target access network device is an access network device that is from the first access network device and the second access network device and that corresponds to the target PLMN.

It can be learned that, according to the method described in the fourth aspect, when the UE accesses the network via two 3GPP access network devices, if the service data flow needs to be transmitted via a 3GPP access network device, the UE may properly select, based on a PLMN needed for transmission of the service data flow, one of the two 3GPP access network devices for transmission of the service data flow.

In a possible embodiment, the fifth indication information is policy information, where the policy information indicates that the service data flow is to be transmitted via the access device corresponding to the 3GPP access type, and indicates the one or more PLMNs corresponding to the service data flow.

In a possible embodiment, the fifth indication information includes an association relationship between the service data flow and the one or more PLMNs, and policy information corresponding to each of the one or more PLMNs, where the policy information indicates that the service data flow is to be transmitted via the access device corresponding to the 3GPP access type.

In a possible embodiment, the fifth indication information includes an association relationship between slice information and the one or more PLMNs, and policy information, where the policy information indicates that the service data flow is to be transmitted via the access device corresponding to the 3GPP access type, and indicates slice information corresponding to the service data flow.

In a possible embodiment, the fifth indication information indicates one PLMN corresponding to the service data flow, and the target PLMN is the PLMN corresponding to the service data flow.

In a possible embodiment, the fifth indication information indicates a plurality of PLMNs corresponding to the service data flow, the fifth indication information further includes priorities of the plurality of PLMNs, and the target PLMN is determined in the plurality of PLMNs based on the priorities of the plurality of PLMNs corresponding to the service data flow.

According to the possible embodiment, when the service data flow corresponds to the plurality of PLMNs, one of the PLMNs may be properly selected for transmission of the service data flow.

In a possible embodiment, before the UE receives the fifth indication information, the UE may further send sixth indication information, where the sixth indication information indicates that the UE supports connections to the network via two 3GPP access network devices, and the sixth indication information is for generating the fifth indication information.

For example, the UE may send the sixth indication information to a first network element over an access network. The first network element may send the sixth indication information to a PCF/UDM. In this way, after receiving the sixth indication information, the PCF/UDM may generate the fifth indication information based on the sixth indication information.

According to the possible embodiment, the fifth indication information may be generated more flexibly based on an actual requirement.

According to a fifth aspect, this application provides a session processing method, applied to a scenario in which a user equipment UE accesses a network via access network devices, where the access network devices include a first access network device and a second access network device, the first access network device is a 3rd generation partnership project 3GPP access network device in a first public land mobile network PLMN, the second access network device is a 3GPP access network device in a second PLMN, and the first PLMN is different from the second PLMN. The method includes:

The UE receives indication information, where the indication information indicates slice information corresponding to a service data flow; and the service data flow is to be transmitted via an access device corresponding to a 3GPP access type. The UE sends a first message via a target access network device, where the first message is for requesting to establish a session corresponding to the service data flow or for modifying an existing session on the target access network device to support transmission of the service data flow; the target access network device is an access network device that is from the first access network device and the second access network device and that corresponds to a target PLMN; and the target PLMN is a PLMN that is from the first PLMN and the second PLMN and that supports the slice information corresponding to the service data flow, or the target PLMN is a PLMN that is from the first PLMN and the second PLMN and that allows the UE to use the slice information corresponding to the service data flow.

It can be learned that, according to the method described in the fifth aspect, when the UE accesses the network via two 3GPP access network devices, if the service data flow needs to be transmitted via a 3GPP access network device, the UE may properly select, based on a slice needed for transmission of the service data flow, one of the two 3GPP access network devices for transmission of the service data flow.

In a possible embodiment, the UE determines the target PLMN based on the indication information and second information, where the second information includes one or more of the following: slice information supported/not supported by the first PLMN, slice information supported/not supported by the second PLMN, slice information that the first PLMN allows/does not allow the UE to use, and slice information that the second PLMN allows/does not allow the UE to use.

In a possible embodiment, if both the first PLMN and the second PLMN support the slice information corresponding to the service data flow, or both the first PLMN and the second PLMN allow the UE to use the slice information corresponding to the service data flow, the UE determines the target PLMN based on a PLMN priority, where the PLMN priority is a PLMN priority corresponding to the service data flow or a PLMN priority corresponding to the UE.

According to the possible embodiment, when a plurality of PLMNs all support the slice information corresponding to the service data flow, one of the PLMNs may be properly selected for transmission of the service data flow.

According to a sixth aspect, this application provides a communication apparatus. For example, the communication apparatus may be a UE or a module, for example, a processor, a chip, or a chip system, used in the UE, or may be a logical node, a logical module, or software that can implement all or some functions of the UE. For another example, the communication apparatus may be a module of the first network element, for example, a processor, a chip, or a chip system, or may be a logical node, a logical module, or software that can implement all or some functions of the first network element. The communication apparatus includes a module/unit configured to perform any method in the first aspect to the fifth aspect and the possible implementations thereof.

According to a seventh aspect, this application provides a communication apparatus, including a processor. The processor is coupled to a memory, the memory is configured to store a program or instructions, and when the program or the instructions are executed by the processor, the apparatus is caused to perform the method in any one of the first aspect to the fifth aspect.

According to an eighth aspect, this application provides a chip. The chip includes a processor and an interface, the processor is coupled to the interface, the interface is configured to receive or output a signal, and the processor is configured to execute code instructions, to cause the chip to perform the method in any one of the first aspect to the fifth aspect.

According to a ninth aspect, this application provides a computer-readable storage medium. The computer-readable storage medium stores computer-executable instructions, and when the computer-executable instructions are invoked, any one of the first aspect to the fifth aspect is performed.

According to a tenth aspect, this application provides a computer program product. The computer program product includes computer program code, and when the computer program code is run, any one of the first aspect to the fifth aspect is performed.

According to an eleventh aspect, this application provides a communication system. The communication system includes a UE configured to perform the method in the first aspect and the first network element configured to perform the second aspect.

### BRIEF DESCRIPTION OF DRAWINGS

FIG. 1 is a diagram of a 5G communication system according to this application;
FIG. 2 is a diagram of a system architecture of an application scenario 1 according to this application;
FIG. 3 is a diagram of a system architecture of an application scenario 2 according to this application;
FIG. 4 is a diagram of a system architecture of an application scenario 3 according to this application;
FIG. 5 is a schematic flowchart of a session processing method according to this application;
FIG. 6 is a schematic flowchart of a session processing method according to this application;
FIG. 7 is a schematic flowchart of a session processing method according to this application;
FIG. 8 is a schematic flowchart of a session processing method according to this application;
FIG. 9 is a schematic flowchart of a session processing method according to this application;
FIG. 10 is a diagram of a structure of a communication apparatus 1000 according to this application; and
FIG. 11 is a diagram of a structure of another communication apparatus 1100 according to this application.

### DESCRIPTION OF EMBODIMENTS

The following further describes specific embodiments of this application in detail with reference to accompanying drawings.

The terms "first", "second", and the like in this specification, claims, and accompanying drawings of this application are used to distinguish between different objects, but are not used to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

In this application, "at least one piece (item)" means one or more, "a plurality of" means two or more, "at least two pieces (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural.

In order that one of two 3GPP access network devices can be properly selected for transmission of a service data flow when a UE accesses a network via the two 3GPP access network devices, embodiments of this application provide a session processing method and a communication apparatus. To better understand embodiments of this application, the following first describes a system architecture in embodiments of this application.

Technical solutions in embodiments of this application may be applied to various communication systems, such as a global system for mobile communication (global system for mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a future communication system, and the like.

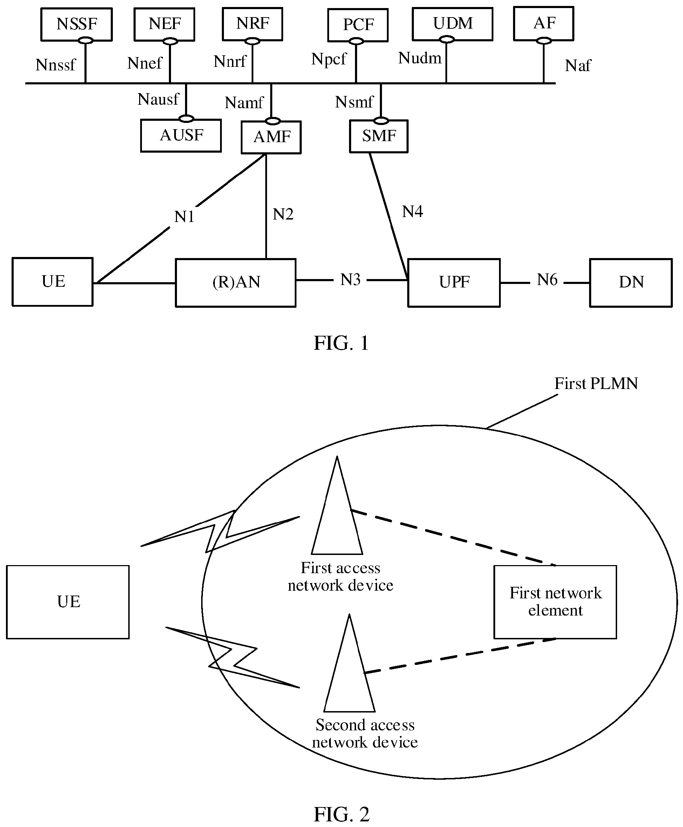

The following first describes a 3GPP system architecture of 5G. As shown in FIG. 1, network functions and entities included in a 5G communication system mainly include a UE, a (R)AN, a UPF, a DN, an AUSF, an AMF, an SMF, an NSSF, a NEF, an NRF, a PCF, a UDM, and an AF. For full names of the network functions and entities, refer to the following descriptions. FIG. 1 shows interaction relationships between the network functions and entities, and corresponding interfaces. For example, the UE and the AMF may interact with each other through an N1 interface, and an interaction message is referred to as an N1 Message. Some interfaces are implemented as service-based interfaces.

It should be understood that the UE, the (R)AN, the UPF, and the DN shown in FIG. 1 are referred to as data plane network functions and entities. User data traffic may be transmitted by using a PDU session established between the UE and the DN, via two network function entities: the (R)AN and the UPF. The remaining parts are referred to as control plane network functions and entities. The control plane network functions and entities are mainly responsible for functions such as authentication and authorization, registration management, session management, mobility management, and policy control, to implement reliable and stable transmission of user-layer traffic. A user plane is for carrying service data, and a control plane is for carrying a signaling message.
1. User equipment (user equipment, UE): may also be referred to as a terminal device. For example, the user equipment may be a handheld terminal, a notebook computer, a cellular phone, a smartphone, a tablet computer, a handheld device, an AR device, a VR device, a machine type communication terminal, or another device that may access a network. The UE and an access network device may communicate with each other by using an air interface technology (for example, an NR or LTE technology). UEs may also communicate with each other by using an air interface technology (for example, the NR or LTE technology). In internet of vehicles communication, a communication terminal uploaded on a vehicle is a UE, and a road side unit (Road Side Unit, RSU) may also be used as a UE. A communication terminal carried on an unmanned aerial vehicle may be considered as a UE.
2. Access network (radio access network, RAN) device: mainly responsible for functions such as radio resource management, quality of service management, and data compression and encryption on an air interface side. The access network device may include various forms of base stations, such as a macro base station, a micro base station, a relay station, and an access point. In systems using different radio access technologies, a device having a base station function may have different names. For example, in a 5th generation (5th generation, 5G) system, the device is referred to as a gNB.
3. User plane function (user plane function, UPF) network element: responsible for forwarding and receiving user data on a UE. The UPF network element may receive user data from a data network, and transmit the user data to the UE via an access network device. Alternatively, the UPF network element may receive user data from the UE via the access network device, and forward the user data to the data network. Transmission resources and scheduling functions in the UPF network element that provide services for the UE are managed and controlled by an SMF network element.
4. Data network (data network, DN): may also be referred to as a packet data network (packet data network, PDN), and is usually a network located outside an operator network, for example, a third-party network. The operator network may access a plurality of DNs. The DN may be deployed with a plurality of services, and may provide a data service, a voice service, and/or the like for a UE.
5. Authentication server function (authentication server function, AUSF) network element: supports 3GPP and non-3GPP access authentication.
6. Access and mobility management function (access and mobility management function, AMF) network element: belongs to a core network element, and is mainly responsible for signaling processing, for example, functions such as access control, mobility management, attachment and detachment, and gateway selection. When the AMF network element provides a service for a session in a UE, the AMF network element provides a control plane storage resource for the session, to store a session identifier, an SMF network element identifier associated with the session identifier, and the like.
7. Session management function (session management function, SMF) network element: responsible for user plane network element selection, user plane network element redirection, internet protocol (internet protocol, IP) address assignment, bearer establishment, modification, and release, and QoS control.
8. Network slice selection function (network slice selection function, NSSF) network element: is mainly responsible for network slice selection, and determines, based on slice selection assistance information, subscription information, and the like of a UE, a network slice instance that the UE is allowed to access.
9. Network exposure function (network exposure function, NEF) network element: mainly supports secure interaction between a 3GPP network and a third-party application.
10. Network repository function (network repository function, NRF) network element: supports registration and discovery of a network function.
11. Policy control function (policy control function, PCF) network element: is responsible for policy control decision, and provides policy rules and a traffic-based charging control function for control plane functions.
12. Unified data management (unified data management, UDM) network element: mainly responsible for subscription data management of a UE, including storage and management of a UE identifier, access authorization of the UE, and the like.
13. Application function (application function, AF) network element: mainly supports interacting with a 3GPP core network to provide a service, for example, affecting a data routing decision and a policy control function, or providing some third-party services for a network side.

The following describes application scenarios in this application.

Application scenario 1: FIG. 2 is a diagram of a system architecture of the application scenario 1 according to an embodiment of this application. As shown in FIG. 2, the system architecture includes a UE, a first access network device, a second access network device, and a first network element. In FIG. 2, an example in which the system architecture includes two access network devices is used. The system architecture may alternatively include more access network devices. This is not limited in embodiments of this application. As shown in FIG. 2, the UE is connected to the first access network device and the second access network device, and is connected to a same PLMN, namely, a first PLMN, via the first access network device and the second access network device. In addition, the UE is connected to the same first network element via the first access network device and the second access network device.

For descriptions of the UE, refer to the foregoing descriptions of the UE.

The access network device is an access network device whose type is a 3GPP access type, the access network device is of the 3GPP access type, or the access network device is an access network device in a 3GPP access network. The access network device is mainly responsible for functions such as radio resource management, quality of service management, and data compression and encryption on an air interface side. The access network device may include various forms of base stations, such as a macro base station, a micro base station, a relay station, and an access point. For example, the access network device may be a base station (base station), an evolved NodeB (evolved NodeB, eNodeB), a next generation NodeB (next generation NodeB, gNB), a next generation base station in a 6th generation (6th generation, 6G) mobile communication system, a base station in a future mobile communication system, or the like. All or some functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or some functions of the access network device. In embodiments of this application, a form of the access network device is not limited. An apparatus configured to implement a function of the access network device may be an access network device, or may be an apparatus, for example, a chip system, that can support the access network device in implementing the function. The apparatus may be installed in the access network device or used in matching with the access network device. Radio access technology (radio access technology, RAT) types supported by the first access network device and the second access network device may be the same or may be different. In other words, radio access technologies (radio access technologies, RATs) provided by the first access network device and the second access network device may be the same or may be different.

For example, the radio access technology type may be 5G NR, 5G NR (satellite), or 6G. 5G NR (satellite) may be further classified into a low earth orbit (low earth orbit, LEO), a medium earth orbit (medium earth orbit, MEO), and a geostationary orbit (geostationary earth orbit, GEO).

The first network element is a core network device, and may provide a service related to mobility management, access management, registration management, or a session. For example, the first network element may receive a registration request message sent by the UE, and perform processing related to UE registration. For another example, the first network element may receive a request message that is sent by the UE and that is for establishing a session, and perform processing related to session establishment. For example, in a 5G system, the first network element may be an AMF network element. In a 6G system, the first network element may be referred to as an AMF network element or have another name. This is not limited in embodiments of this application.

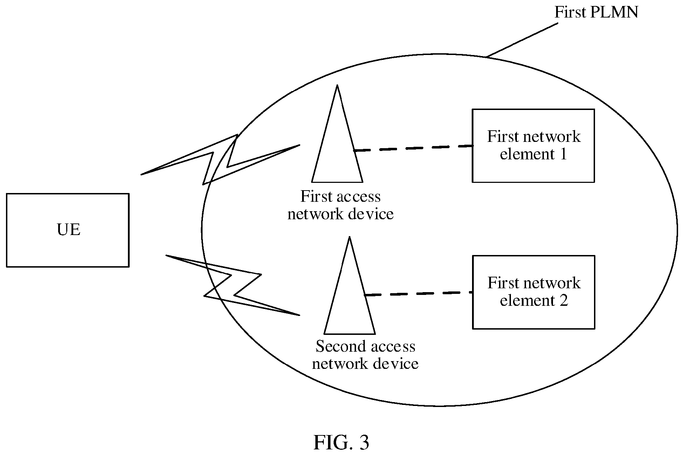

Application scenario 2: FIG. 3 is a diagram of a system architecture of the application scenario 2 according to an embodiment of this application. As shown in FIG. 3, the system architecture includes a UE, a first access network device, a second access network device, and a first network element. In FIG. 3, an example in which the system architecture includes two access network devices is used. The system architecture may alternatively include more access network devices. This is not limited in embodiments of this application. As shown in FIG. 3, the UE is connected to the first access network device and the second access network device, and is connected to a same PLMN, namely, a first PLMN, via the first access network device and the second access network device. In addition, the UE is connected to different first network elements in the first PLMN via the first access network device and the second access network device.

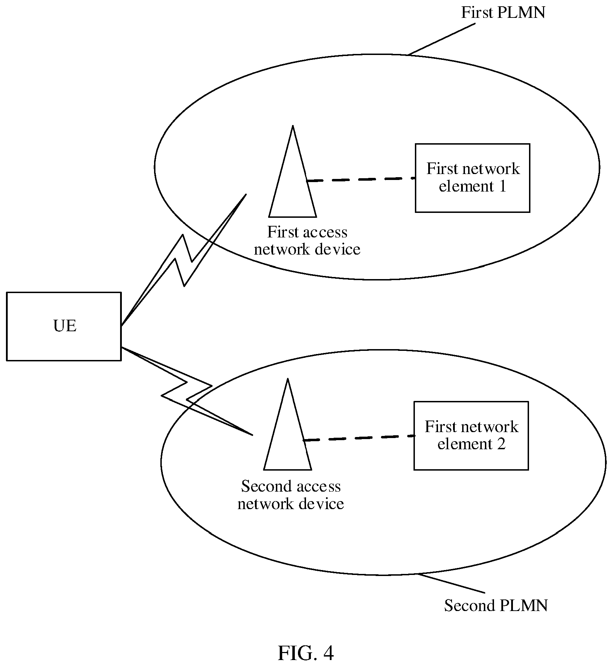

Application scenario 3: FIG. 4 is a diagram of a system architecture of the application scenario 3 according to an embodiment of this application. As shown in FIG. 4, the system architecture includes a UE, a first access network device, a second access network device, and a first network element. In FIG. 4, an example in which the system architecture includes two access network devices is used. The system architecture may alternatively include more access network devices. This is not limited in embodiments of this application. As shown in FIG. 4, the UE is connected to the first access network device and the second access network device. The UE is connected to a first network element 1 in a first PLMN via the first access network device. The UE is connected to a first network element 2 in a second PLMN via the second access network device. The first PLMN is different from the second PLMN.

For descriptions of the UE, the access network device, and the first network element in the application scenario 2 and the application scenario 3, refer to the descriptions in the application scenario 1. Details are not described herein again.

It can be learned that, in each of the application scenario 1 to the application scenario 3, the UE accesses a network via two 3GPP access network devices. When the UE accesses the network via two 3GPP access network devices, if a service data flow needs to be transmitted via a 3GPP access network device, the UE cannot properly select one of the 3GPP access network devices for transmission of the service data flow. In view of this, this application provides a session processing method and a communication apparatus, so that when a UE accesses a network via two 3GPP access network devices, one of the 3GPP access network devices can be properly selected for transmission of a service data flow.

The following further describes the session processing method and the communication apparatus with reference to the accompanying drawings. It may be understood that, in this application, an example in which a UE, an access network device, and a first network element are used as execution entities of an interaction example is used for description. However, the execution entities of the interaction example are not limited in this application. For example, the UE in the method provided in this application may be a chip, a chip system, or a processor used in the UE, or may be a logical node, a logical module, or software that can implement all or some of the UE. The access network device in the method provided in this application may be a chip, a chip system, or a processor used in the access network device, or may be a logical node, a logical module, or software that can implement all or some of the access network device. The first network element in the method provided in this application may also be a chip, a chip system, or a processor used in the first network element, or may be a logical node, a logical module, or software that can implement all or some of functions of the first network element.

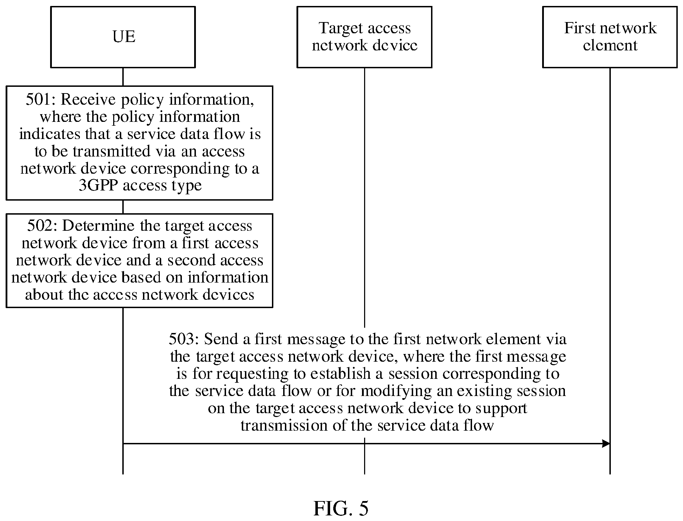

FIG. 5 is a schematic flowchart of a session processing method according to an embodiment of this application. The method described in FIG. 5 may be applied to any one of the application scenario 1 to the application scenario 3 described above.

501: A UE receives policy information, where the policy information indicates that a service data flow is to be transmitted via an access network device corresponding to a 3GPP access type.

In this embodiment of this application, the policy information may be a user equipment route selection policy (UE route selection policy, URSP). Alternatively, the policy information may have another name. This is not limited in embodiments of this application.

Optionally, the policy information may be generated by a core network device. For example, the policy information may be generated by a PCF network element. For example, the PCF network element may generate the policy information based on capability information of the UE and/or subscription information of the UE. After generating the policy information, the PCF may send the policy information to a first network element, and the first network element sends the policy information to the UE over the access network.

Optionally, in embodiments corresponding to FIG. 5 to FIG. 9, the first network element is a core network device, and may provide a service related to mobility management, access management, registration management, or a session. For example, the first network element may receive a registration request message sent by the UE, and perform processing related to UE registration. For another example, the first network element may receive a request message that is sent by the UE and that is for establishing a session, and perform processing related to session establishment. For example, in a 5G system, the first network element may be an AMF network element. In a 6G system, the first network element may be referred to as an AMF network element or have another name. This is not limited in embodiments of this application.

502: The UE determines a target access network device from a first access network device and a second access network device based on information about the access network devices.

In this embodiment of this application, the information about the access network devices is information about the first access network device and information about the second access network device. The UE accesses a network via two access network devices of the 3GPP access type: the first access network device and the second access network device, and the service data flow needs to be transmitted via the access network device corresponding to the 3GPP access type. Therefore, the UE may determine the target access network device from the first access network device and the second access network device based on the information about the first access network device and the information about the second access network device, so that the service data flow can be subsequently transmitted via the target access network device.

In a possible embodiment, the information about the access network devices includes one or more of the following: an air interface signal status between the access network device and the UE, load information of the access network device, slice information supported by the access network device, a radio access technology (radio access technology, RAT) type supported by the access network device, a service type supported by the access network device, and frequency information supported by the access network device.

Determining, based on the air interface signal status between the access network device and the UE, the target access network device configured to transmit the service data flow helps ensure signal transmission quality of the service data flow. Determining, based on the load information of the access network device, the target access network device configured to transmit the service data flow helps implement load balancing between access network devices. Determining, based on the slice information supported by the access network device, the target access network device configured to transmit the service data flow helps meet a slice requirement of the service data flow. Determining, based on the radio access technology type supported by the access network device, the target access network device configured to transmit the service data flow helps meet a radio access technology type requirement. Determining, based on the service type supported by the access network device, the target access network device configured to transmit the service data flow helps meet a service type requirement of the service data flow. Determining, based on the frequency information supported by the access network device, the target access network device configured to transmit the service data flow helps meet a transmission performance requirement of the service data flow.

The following describes several possible implementations in which the UE determines the target access network device from the first access network device and the second access network device based on the information about the access network devices.
1. The information about the access network devices includes the air interface signal status between the access network device and the UE; and the target access network device is an access network device that is from the first access network device and the second access network device and that has a better air interface signal status.

Optionally, the UE may perform air interface signal measurement, to obtain an air interface signal status of the first access network device and an air interface signal status of the second access network device. For example, if the air interface signal status of the first access network device is better than the air interface signal status of the second access network device, the first access network device is the target access network device.

Optionally, the air interface signal status may be one or more of the following: a reference signal received power (reference signal received power, RSRP), a signal to interference plus noise ratio (signal to interference plus noise ratio, SINR), reference signal received quality (reference signal received quality, RSRQ), or a received signal strength indicator (received signal strength indicator, RSSI).

For example, if an RSRP of the first access network device is higher than an RSRP of the second access network device, it indicates that the air interface signal status of the first access network device is better than the air interface signal status of the second access network device.

2. The information about the access network devices includes the load information of the access network device; and the target access network device is an access network device that is from the first access network device and the second access network device and that has a lower load. In this embodiment of this application, the load information may also be referred to as congestion information. The load information of the access network device may be understood as the load information of the access network device, or load information of a network in which the access network device is located.

Optionally, the UE may obtain load information of the first access network device from a broadcast message of the first access network device, and obtain load information of the second access network device from a broadcast message of the second access network device. For example, if a load of the first access network device is lower than a load of the second access network device, the first access network device is the target access network device.

3. The information about the access network devices includes the slice information supported by the access network device; and the target access network device is an access network device that is from the first access network device and the second access network device and that supports slice information corresponding to the service data flow. The slice information supported by the access network device may be understood as the slice information supported by the access network device, or slice information supported by a network in which the access network device is located.

The slice information corresponding to the service data flow indicates a slice needed for transmission of the service data flow.

Optionally, the UE may obtain slice information supported by the first access network device from a broadcast message of the first access network device, and obtain slice information supported by the second access network device from a broadcast message of the second access network device.

Optionally, the policy information further indicates the slice information corresponding to the service data flow. For example, the policy information includes "service data flow→3GPP Access+slice 1", indicating that the service data flow needs to be transmitted via the access network device corresponding to the 3GPP access type, and the service data flow needs to be carried and transmitted by using the slice 1. If the first access network device supports the slice 1, and the second access network device does not support the slice 1, the first access network device is the target access network device.

4. The information about the access network devices includes the radio access technology type supported by the access network device; and the target access network device is an access network device that is from the first access network device and the second access network device and that supports a radio access technology type corresponding to the service data flow.

The radio access technology type corresponding to the service data flow is a radio access technology type needed for transmission of the service data flow. For descriptions of the radio access technology type, refer to the foregoing descriptions of the radio access technology type in the application scenario 1. Details are not described herein again.

Optionally, the UE may obtain a radio access technology type supported by the first access network device from a broadcast message of the first access network device, and obtain a radio access technology type supported by the second access network device from a broadcast message of the second access network device.

In a possible embodiment, the policy information further indicates the radio access technology type corresponding to the service data flow. For example, the policy information includes "service data flow→3GPP Access+6G", indicating that the service data flow needs to be transmitted via the access network device corresponding to the 3GPP access type, and the service data flow needs to be transmitted by using a 6G technology. If the first access network device supports 6G, and the second access network device does not support 5G NR, the first access network device is the target access network device.

Optionally, before the user equipment UE receives the policy information, the UE may further send first indication information, where the first indication information indicates that the UE supports connections to the network via two 3GPP access network devices, and the first indication information is for generating the policy information indicating the radio access technology type corresponding to the service data flow. In other words, the first indication information indicates that the UE supports connections to two 3GPP access network devices, or the UE supports simultaneous connections to two 3GPP access network devices. Based on the optional manner, a network side may determine, based on whether the UE supports connections to the network via two 3GPP access network devices, whether to generate the policy information indicating the radio access technology type corresponding to the service data flow, and may generate a policy more flexibly based on an actual requirement.

Optionally, the UE may send the first indication information to the first network element over an access network, and the first network element sends the first indication information to the PCF network element. After receiving the first indication information, the PCF network element generates, based on the first indication information, the policy information indicating the radio access technology type corresponding to the service data flow.

In another possible embodiment, the policy information may not indicate the radio access technology type corresponding to the service data flow. A specific slice is supported only by a specific radio access technology type. Therefore, the policy information may indicate slice information corresponding to the service data flow. The UE determines the slice information corresponding to the service data flow based on the policy information, and then determines the radio access technology type corresponding to the service data flow based on the slice information corresponding to the service data flow.

5. The service data flow is a data flow of a first service; the information about the access network devices includes the radio access technology type supported by the access network device; and the target access network device is an access network device that is from the first access network device and the second access network device and whose radio access technology type supports the first service.

Optionally, the first service is an emergency service or a voice service, or may be a service of another type. This is not limited in embodiments of this application.

Optionally, the UE may obtain a radio access technology type supported by the first access network device from a broadcast message of the first access network device, and obtain a radio access technology type supported by the second access network device from a broadcast message of the second access network device.

Optionally, the UE may further receive second indication information in advance, where the second indication information indicates a radio access technology type that supports the first service or a radio access technology type that does not support the first service. If the second indication information indicates the radio access technology type that does not support the first service, the UE may exclude the radio access technology type that does not support the first service, to obtain the radio access technology type that supports the first service. In this way, the UE can know a specific radio access technology type that supports the first service, so that the UE can determine, from the first access network device and the second access network device, the target access network device whose radio access technology type supports the first service.

Optionally, the UE may receive, in a registration process, the second indication information from the first network element over the access network. Correspondingly, in the registration process of the UE, the first network element may send the second indication information to the UE over the access network.

For example, it is assumed that the first access network device supports 6G, and the second access network device does not support 5G NR, where 6G supports the emergency service, and 5G NR does not support the emergency service. In this case, the first access network device is the target access network device.

6. The service data flow is a data flow of a first service; the information about the access network devices includes the service type supported by the access network device; and the target access network device is an access network device that is from the first access network device and the second access network device and that supports the first service. The service type supported by the access network device may be understood as the service type supported by the access network device, or a service type supported by a network in which the access network device is located.

Optionally, the first service is an emergency service or a voice service, or may be a service of another type. This is not limited in embodiments of this application.

Optionally, the UE may obtain a service type supported by the first access network device from a broadcast message of the first access network device, and the UE may obtain a service type supported by the second access network device from a broadcast message of the second access network device.

For example, it is assumed that the first access network device supports the emergency service, the second access network device does not support the emergency service, and the service data flow is a data flow of the emergency service. In this case, the first access network device is the target access network device.

7. The information about the access network devices includes the frequency information supported by the access network device; and the target access network device is an access network device that is from the first access network device and the second access network device and that supports frequency information corresponding to the service data flow.

The frequency information corresponding to the service data flow means that a radio resource corresponding to the frequency information is needed for transmission of the service data flow.

Optionally, the UE may obtain frequency information supported by the first access network device from a broadcast message of the first access network device, and obtain frequency information supported by the second access network device from a broadcast message of the second access network device.

In a possible embodiment, the policy information further indicates the frequency information corresponding to the service data flow. For example, the policy information includes "service data flow→3GPP Access+F1 Frequency", indicating that the service data flow needs to be transmitted via the access network device corresponding to the 3GPP access type, and the service data flow needs to be transmitted by using a radio resource corresponding to F1 Frequency (F1 frequency). If the first access network device supports F1 Frequency, and the second access network device does not support F1 Frequency, the first access network device is the target access network device.

In a possible embodiment, the UE may further determine the target access network device from the first access network device and the second access network device based on a plurality of the following information: the air interface signal status between the access network device and the UE, the load information of the access network device, the slice information supported by the access network device, the radio access technology type supported by the access network device, the service type supported by the access network device, and the frequency information supported by the access network device.

For example, if the air interface signal status between the first access network device and the UE is the same as the air interface signal status between the second access network device and the UE, the UE may continue to determine the target access network device from the first access network device and the second access network device based on one or more of the following information: the load information of the access network device, the slice information supported by the access network device, the radio access technology type supported by the access network device, the service type supported by the access network device, and the frequency information supported by the access network device.

For another example, if the load information of the first access network device is the same as the load information of the second access network device, the UE may continue to determine the target access network device from the first access network device and the second access network device based on one or more of the following information: the air interface signal status between the access network device and the UE, the slice information supported by the access network device, the radio access technology type supported by the access network device, the service type supported by the access network device, and the frequency information supported by the access network device.

For another example, the policy information includes "service data flow→3GPP Access+slice 1", indicating that the service data flow needs to be transmitted via the access network device corresponding to the 3GPP access type, and the service data flow needs to be transmitted by using the slice 1. If the first access network device supports the slice 1, and the second access network device also supports the slice 1, the UE may continue to determine the target access network device from the first access network device and the second access network device based on one or more of the following information: the air interface signal status between the access network device and the UE, the load information of the access network device, the radio access technology type supported by the access network device, the service type supported by the access network device, and the frequency information supported by the access network device.

For another example, the policy information includes "service data flow→3GPP Access+6G", indicating that the service data flow needs to be transmitted via the access network device corresponding to the 3GPP access type, and the service data flow needs to be transmitted by using a 6G technology. If the first access network device supports 6G, and the second access network device also supports 6G, the UE may continue to determine the target access network device from the first access network device and the second access network device based on one or more of the following information: the air interface signal status between the access network device and the UE, the load information of the access network device, the slice information supported by the access network device, the service type supported by the access network device, and the frequency information supported by the access network device.

For another example, if the first access network device supports the first service, and the second access network device also supports the first service, the UE may continue to determine the target access network device from the first access network device and the second access network device based on one or more of the following information: the air interface signal status between the access network device and the UE, the load information of the access network device, the slice information supported by the access network device, the radio access technology type supported by the access network device, and the frequency information supported by the access network device.

For another example, the policy information includes "service data flow→3GPP Access+F1 Frequency", indicating that the service data flow needs to be transmitted via the access network device corresponding to the 3GPP access type, and the service data flow needs to be transmitted by using a radio resource corresponding to F1 Frequency. If the first access network device supports F1 Frequency, and the second access network device also supports F1 Frequency, the UE may continue to determine the target access network device from the first access network device and the second access network device based on one or more of the following information: the air interface signal status between the access network device and the UE, the load information of the access network device, the slice information supported by the access network device, the radio access technology type supported by the access network device, and the service type supported by the access network device.

503: The UE sends a first message to the first network element via the target access network device, where the first message is for requesting to establish a session corresponding to the service data flow or for modifying an existing session on the target access network device to support transmission of the service data flow. Correspondingly, the first network element connected to the target access network device may receive the first message.

In this embodiment of this application, that the first message is for requesting to establish the session corresponding to the service data flow or for modifying the existing session on the target access network device to support transmission of the service data flow means that the first message is for requesting to establish or modify a transmission channel, a communication channel, or a transmission path for the service data flow.

After the UE determines the target access network device, if no session meeting a transmission requirement of the service data flow is established on the target access network device, the UE may send, via the target access network device, the first message to the first network element connected to the target access network device, where the first message is for requesting to establish the session corresponding to the service data flow, so that the session can be established on the target access network device, and the service data flow can be subsequently transmitted via the target access network device. The first message may be a PDU session establishment (PDU Session Establishment) request message. If a session meeting the transmission requirement of the service data flow has been established on the target access network device, the UE may send, via the target access network device, the first message to the first network element connected to the target access network device, where the first message is for modifying an existing session on the target access network device to support transmission of the service data flow, in other words, the service data flow is associated with an existing session on the target access network device, so that the service data flow can be subsequently transmitted via the target access network device. The first message may be a PDU session modification (PDU Session Modification) request message, and the message includes information about the service data flow. For example, the transmission requirement of the service data flow may be a slice requirement, a radio access technology type requirement, a service type requirement, a transmission performance requirement, or the like of the service data flow.

In this embodiment of this application, the session may be a PDU session, or may have another session name. This is not limited in embodiments of this application.

It can be learned that, according to the method described in FIG. 5, when the UE accesses the network via two 3GPP access network devices, if the service data flow needs to be transmitted via a 3GPP access network device, the UE may properly select, based on information about the two 3GPP access network devices, one of the two 3GPP access network devices for transmission of the service data flow.

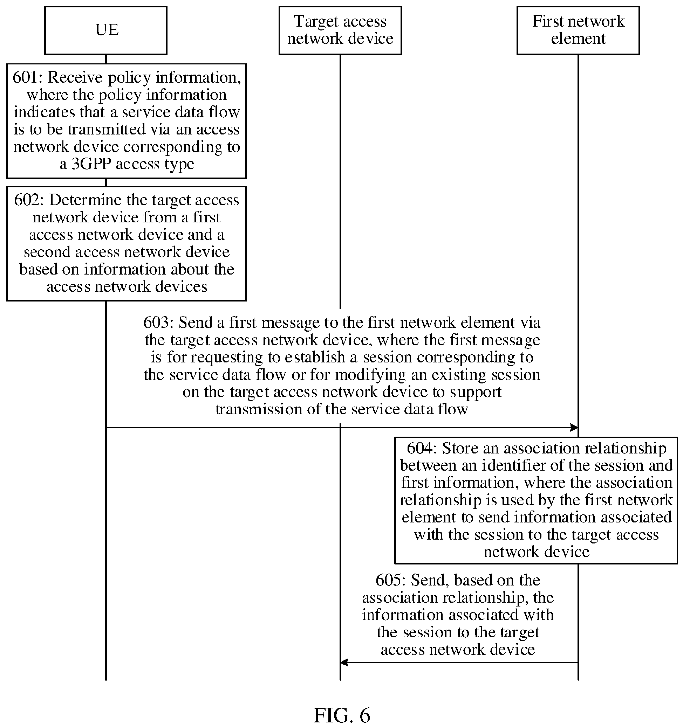

FIG. 6 is a schematic flowchart of another session processing method according to an embodiment of this application. The method described in FIG. 6 may be applied to any one of the application scenario 1 to the application scenario 3 described above.

601: A UE receives policy information, where the policy information indicates that a service data flow is to be transmitted via an access network device corresponding to a 3GPP access type.

602: The UE determines a target access network device from a first access network device and a second access network device based on information about the access network devices.

603: The UE sends, via the target access network device, a first message to a first network element connected to the target access network device, where the first message is for requesting to establish a session corresponding to the service data flow or for modifying an existing session on the target access network device to support transmission of the service data flow. Correspondingly, the first network element connected to the target access network device may receive the first message.

For specific implementations of step 601 to step 603, refer to specific implementations of step 501 to step 503. Details are not described herein again.

604: The first network element stores an association relationship between an identifier of the session and first information, where the association relationship is used by the first network element to send information associated with the session to the target access network device.

605: The first network element sends, based on the association relationship, the information associated with the session to the target access network device. Correspondingly, the target access network device may receive the information associated with the session.

In this embodiment of this application, after receiving the first message, the first network element may store the association relationship between the identifier of the session and the first information, so that when the first network element subsequently needs to send the information associated with the session to the target access network device, the first network element can find the target access network device based on the association relationship.

Optionally, the information associated with the session is information related to the session. For example, the information associated with the session may include N2 session management information (N2 SM information), a PDU session establishment accept (PDU Session Establishment Accept) message, a PDU session resource configuration (PDU Session Resource Setup) message, or other information related to the session.

In this embodiment of this application, the first message may carry the identifier of the session.

In this embodiment of this application, the first information is information that may be for distinguishing the target access network device.

In a first possible embodiment, the first information is an identifier of the target access network device.

Optionally, the identifier of the target access network device is a cell identifier corresponding to the target access network device. For example, the identifier of the target access network device may be user location information (User location info). Alternatively, the identifier of the target access network device is an identifier allocated by the target access network device to the UE in a connection between the target access network device and the first network element. For example, the identifier of the target access network device may be an access network NG application protocol (NG application protocol, NGAP) identifier. Alternatively, the identifier of the target access network device is a global RAN node identifier (global RAN node ID).

In another possible embodiment, the first information is a radio access technology type supported by the target access network device, and a radio access technology type supported by the first access network device is different from a radio access technology type supported by the second access network device.

Optionally, a radio access technology type corresponding to an identifier of an access network device is preconfigured on the first network element. In this way, the first network element knows a radio access technology type supported by each access network device connected to the first network element. The first network element stores an association relationship between the identifier of the session and the radio access technology type of the target access network device, so that when the first network element subsequently obtains the information associated with the session, the first network element can find the radio access technology type corresponding to the identifier of the session based on the association relationship. Because the radio access technology types of the first access network device and the second access network device are different, the first network element can determine the target access network device based on the radio access technology type corresponding to the identifier of the session, to send the information associated with the session to the target access network device.

Optionally, the first network element may further store an association relationship between the identifier of the session and an access type supported by the target access network device. In other words, the first network element stores an association relationship between the identifier of the session and (the access type supported by the target access network device, and the identifier of the target access network device/the radio access technology type supported by the target access network device). The access type supported by the target access network device may be a 3GPP access type or a non-3GPP access type. It should be understood that the first network element not only needs to store the association relationship between the identifier of the session and the access type supported by the target access network device, but also needs to store the association relationship between the identifier of the session and the first information (the identifier of the target access network device/the radio access technology type supported by the target access network device).

In a possible embodiment, after the first network element stores the association relationship between the identifier of the session and the first information, if the first network element receives the identifier of the session and the information associated with the session that are sent by a second network element, the first network element sends, based on the association relationship, the information associated with the session to the target access network device. According to the possible embodiment, the information associated with the session can be accurately sent to an access network device on which the session is located.

Optionally, the second network element may be an SMF network element, or the second network element may be another core network element. This is not limited in embodiments of this application.

For example, the information associated with the session is the N2 session management information. After storing the association relationship between the identifier of the session and the first information, the first network element may send a session management context create (Create SM context) message to the second network element. After receiving the Create SM context message, the second network element may send an N1N2 message transfer (N1N2 message transfer) message to the first network element, where the message includes the identifier of the session, the N2 session management information, and an N1 session container. After receiving the N1N2 message transfer message, the first network element determines the target access network device based on the stored association relationship between the identifier of the session and the first information, and sends an N2 PDU session request to the target access network device, where the N2 PDU session request carries the N2 session management information and a NAS message. After receiving the N2 PDU session request, the target access network device sends the NAS message to the UE.

The following describes three possible implementations of storing the association relationship between the identifier of the session and the first information.
1. The first network element stores the association relationship between the identifier of the session and the first information if the UE is connected to the first network element via the first access network device and the second access network device.

That the UE is connected to the first network element via the first access network device and the second access network device indicates that the UE supports connections to two 3GPP access network devices, or the UE supports simultaneous connections to two 3GPP access network devices. For example, that the UE is connected to the first network element via the first access network device and the second access network device may be as follows: The UE separately sends a registration request message to the first network element via the first access network device and the second access network device, in other words, the first network element separately receives, from the first access network device and the second access network device, the registration request message sent by the UE.

In other words, in the application scenario 1 shown in FIG. 3, the first network element stores the association relationship between the identifier of the session and the first information. In this way, the target access network device corresponding to the session can be accurately identified subsequently, and the information associated with the session can be sent to the target access network device. In the application scenario 2 and the application scenario 3, the first network element may not store the association relationship between the identifier of the session and the first information, to help save storage resources of the first network element.

Optionally, the first network element stores an association relationship between the identifier of the session and second information if the UE is connected to the first network element via the first access network device or the second access network device (that is, when the UE is connected to only one access network device). The second information is an access type (for example, the 3GPP access type or the non-3GPP access type) supported by the first access network device or the second access network device.

2. The first network element stores the association relationship between the identifier of the session and the first information if the UE supports connections to a network via two 3GPP access network devices or the network allows the UE to connect via two 3GPP access network devices. In this way, the target access network device corresponding to the session can be accurately identified subsequently, and the information associated with the session can be sent to the target access network device.

Optionally, the first network element does not need to store the association relationship between the identifier of the session and the first information if the UE does not support connections to the network via two 3GPP access network devices or the network does not allow the UE to be connected to the network via two 3GPP access network devices. In this way, the first network element may send, based on a stored association relationship between the identifier of the session and the 3GPP access type or the non-3GPP access type, the information associated with the session to an access network device of the 3GPP access type or the non-3GPP access type.

Optionally, the first network element may obtain or receive, from the UE, capability information indicating whether the UE supports connections to the network via two 3GPP access network devices. For example, if the first network element may obtain or receive Dual Steer Capability from the UE, where Dual Steer Capability indicates that the UE supports connections to the network via two RANs, the first network element stores an association relationship between the identifier of the session and second information.

Optionally, the first network element may obtain, from a registration message sent by the UE, capability information indicating whether the UE supports connections to the network via two 3GPP access network devices.

Optionally, the first network element may obtain, from a UDM or a PCF, information indicating whether the network allows the UE to connect via two 3GPP access network devices. For example, if the first network element obtains a Dual Steer subscription authorization from the UDM or the PCF, where the Dual Steer subscription authorization indicates that the network allows the UE to connect via two 3GPP access network devices, the first network element stores an association relationship between the identifier of the session and second information.

Optionally, the first network element may obtain, from a UDM or a PCF in a UE registration process, information indicating whether the network allows the UE to connect via two 3GPP access network devices.

3. The first network element stores the association relationship between the identifier of the session and the first information when the access type supported by the target access network device is the 3GPP access type. It should be understood that the first network element does not need to store the association relationship between the identifier of the session and the first information when the access type supported by the target access network device is the non-3GPP access type. In this way, the first network element may send, based on a stored association relationship between the identifier of the session and the 3GPP access type or the non-3GPP access type, the information associated with the session to an access network device of the 3GPP access type or the non-3GPP access type.

It can be learned that, according to the method described in FIG. 6, the first network element stores the association relationship between the identifier of the session and the first information. In this way, the target access network device corresponding to the session can be accurately identified subsequently, and the information associated with the session can be sent to the target access network device.

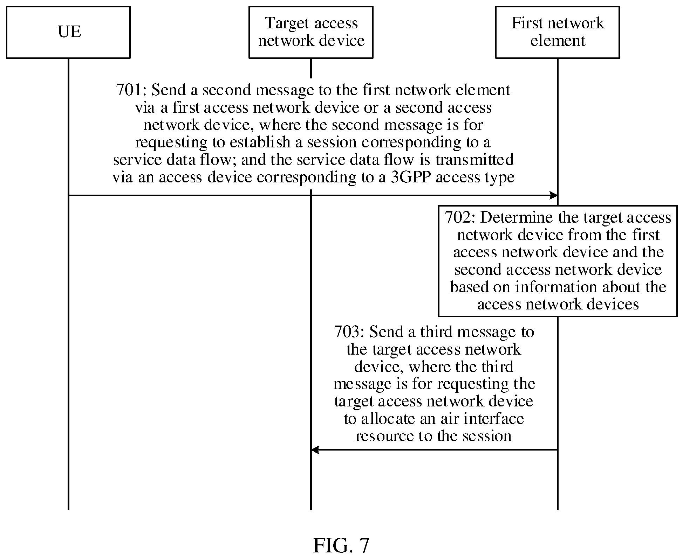

FIG. 7 is a schematic flowchart of another session processing method according to an embodiment of this application. The method described in FIG. 7 may be applied to the application scenario 1 described above.

701: A UE sends a second message to a first network element via a first access network device or a second access network device, where the second message is for requesting to establish a session corresponding to a service data flow; and the service data flow is to be transmitted via an access device corresponding to a 3GPP access type. Correspondingly, the first network element may receive the second message.

In this embodiment of this application, the UE may first receive policy information, where the policy information indicates that the service data flow is to be transmitted via the access device corresponding to the 3GPP access type. After receiving the policy information, the UE sends the second message to the first network element via the first access network device or the second access network device, where the second message is for requesting to establish the session corresponding to the service data flow. The second message may carry an identifier of the session.

Optionally, the policy information may be a URSP. Alternatively, the policy information may have another name. This is not limited in embodiments of this application.

Optionally, the UE may select either of the first access network device and the second access network device to send the second message to the first network element.

702: The first network element determines a target access network device from the first access network device and the second access network device based on information about the access network devices.

In this embodiment of this application, after receiving the second message, the first network element determines the target access network device from the first access network device and the second access network device based on the information about the access network devices. The information about the access network devices is information about the first access network device and information about the second access network device. The UE accesses a network via two access network devices of the 3GPP access type: the first access network device and the second access network device, and the service data flow needs to be transmitted via the access network device corresponding to the 3GPP access type. Therefore, the first network element may determine the target access network device from the first access network device and the second access network device based on the information about the first access network device and the information about the second access network device, so that the service data flow can be subsequently transmitted via the target access network device.

In a possible embodiment, the information about the access network devices includes one or more of the following: an air interface signal status between the access network device and the UE, load information of the access network device, slice information supported by the access network device, a radio access technology type supported by the access network device, a service type supported by the access network device, and frequency information supported by the access network device.

Determining, based on the air interface signal status between the access network device and the UE, the target access network device configured to transmit the service data flow helps ensure signal transmission quality of the service data flow. Determining, based on the load information of the access network device, the target access network device configured to transmit the service data flow helps implement load balancing between access network devices. Determining, based on the slice information supported by the access network device, the target access network device configured to transmit the service data flow helps meet a slice requirement of the service data flow. Determining, based on the radio access technology type supported by the access network device, the target access network device configured to transmit the service data flow helps meet a radio access technology type requirement. Determining, based on the service type supported by the access network device, the target access network device configured to transmit the service data flow helps meet a service type requirement of the service data flow. Determining, based on the frequency information supported by the access network device, the target access network device configured to transmit the service data flow helps meet a transmission performance requirement of the service data flow.

The following describes several possible implementations in which the first network element determines the target access network device from the first access network device and the second access network device based on the information about the access network devices.
1. The information about the access network devices includes the air interface signal status between the access network device and the UE; and the target access network device is an access network device that is from the first access network device and the second access network device and that has a better air interface signal status.

Optionally, the first network element may obtain, from the first access network device, an air interface signal status between the first access network device and the UE, and the first network element may obtain, from the second access network device, an air interface signal status between the second access network device and the UE.

Optionally, the air interface signal status may be one or more of the following: an RSRP, a SINR, RSRQ, or an RSSI.

2. The information about the access network devices includes the load information of the access network device; and the target access network device is an access network device that is from the first access network device and the second access network device and that has a lower load. In this embodiment of this application, the load information may also be referred to as congestion information. The load information of the access network device may be understood as the load information of the access network device, or load information of a network in which the access network device is located.

Optionally, the first network element may obtain load information of the first access network device from the first access network device, and the first network element may obtain load information of the second access network device from the second access network device.

3. The information about the access network devices includes the slice information supported by the access network device; and the target access network device is an access network device that is from the first access network device and the second access network device and that supports a slice corresponding to the service data flow. The slice information supported by the access network device may be understood as the slice information supported by the access network device, or slice information supported by a network in which the access network device is located.

Optionally, the first network element may obtain slice information supported by the first access network device from the first access network device, and the first network element may obtain slice information supported by the second access network device from the second access network device. Alternatively, the slice information supported by the first access network device and the slice information supported by the second access network device are preconfigured on the first network element.

The slice information corresponding to the service data flow indicates a slice needed for transmission of the service data flow. The first network element may receive the policy information from a PCF, where the policy information indicates the slice corresponding to the service data flow.

4. The information about the access network devices includes the radio access technology type supported by the access network device; and the target access network device is an access network device that is from the first access network device and the second access network device and that supports a radio access technology type corresponding to the service data flow.

Optionally, the first network element may obtain a radio access technology type supported by the first access network device from the first access network device, and the first network element may obtain a radio access technology type supported by the second access network device from the second access network device. Alternatively, the radio access technology type supported by the first access network device and the radio access technology type supported by the second access network device are preconfigured on the first network element.

The radio access technology type corresponding to the service data flow is a radio access technology type needed for transmission of the service data flow. For descriptions of the radio access technology type, refer to the foregoing descriptions of the radio access technology type in the application scenario 1. Details are not described herein again.

In a possible embodiment, the first network element may receive the policy information from a PCF, where the policy information indicates the radio access technology type corresponding to the service data flow.

In another possible embodiment, the policy information may not indicate the radio access technology type corresponding to the service data flow. A specific slice is supported only by a specific radio access technology type. Therefore, the policy information may indicate slice information corresponding to the service data flow. The first network element determines the slice information corresponding to the service data flow based on the policy information, and then determines the radio access technology type corresponding to the service data flow based on the slice information corresponding to the service data flow.

5. The service data flow is a data flow of a first service; the information about the access network devices includes the radio access technology type supported by the access network device; and the target access network device is an access network device that is from the first access network device and the second access network device and whose radio access technology type supports the first service.

For how the first network element obtains a radio access technology type supported by the first access network device and a radio access technology type supported by the second access network device, refer to the descriptions in Point 4. Details are not described herein again.

Optionally, a service type supported by a radio access technology type is preconfigured on the first network element.

Optionally, the first service is an emergency service or a voice service, or may be a service of another type. This is not limited in embodiments of this application.

6. The service data flow is a data flow of a first service; the information about the access network devices includes the service type supported by the access network device; and the target access network device is an access network device that is from the first access network device and the second access network device and that supports the first service. The service type supported by the access network device may be understood as the service type supported by the access network device, or a service type supported by a network in which the access network device is located.

Optionally, the first service is an emergency service or a voice service, or may be a service of another type. This is not limited in embodiments of this application.

Optionally, a service type supported by the first access network device and a service type supported by the second access network device are preconfigured on the first network element. Alternatively, the first network element may obtain the service type supported by the first access network device from the first access network device, and obtain the service type supported by the second access network device from the second access network device.

7. The information about the access network devices includes the frequency information supported by the access network device; and the target access network device is an access network device that is from the first access network device and the second access network device and that supports frequency information corresponding to the service data flow.

The frequency information corresponding to the service data flow means that a radio resource corresponding to the frequency information is needed for transmission of the service data flow.

Optionally, the first network element may obtain frequency information supported by the first access network device from the first access network device, and the first network element may obtain frequency information supported by the second access network device from the second access network device. Alternatively, the frequency information supported by the first access network device and the frequency information supported by the second access network device are preconfigured on the first network element.

For specific examples of the foregoing seven implementations in which the first network element determines the target access network device from the first access network device and the second access network device based on the information about the access network devices, refer to specific examples of the seven implementations in which the UE determines the target access network device from the first access network device and the second access network device based on the information about the access network devices in the embodiment described in FIG. 5. Details are not described herein again.

In a possible embodiment, the UE may further determine the target access network device from the first access network device and the second access network device based on a plurality of the following information: the air interface signal status between the access network device and the UE, the load information of the access network device, the slice information supported by the access network device, the radio access technology type supported by the access network device, the service type supported by the access network device, and the frequency information supported by the access network device. For details, refer to specific implementations in which the UE determines the target access network device in the embodiment described in FIG. 5. Details are not described herein again.

In a possible embodiment, a specific implementation in which the first network element determines the target access network device from the first access network device and the second access network device based on the information about the access network devices is: The first network element sends the information about the access network devices to a second network element. The first network element receives fourth indication information sent by the second network element, where the fourth indication information indicates the target access network device configured to establish a session.

The second network element may be an SMF network element or another core network element. This is not limited in embodiments of this application. In other words, the first network element may send the information about the access network devices to the second network element, and after determining the target access network device based on the information about the access network devices, the second network element notifies the first network element of the target access network device. A specific implementation in which the second network element determines the target access network device based on the information about the access network devices is the same as a specific implementation in which the first network element determines the target access network device based on the information about the access network devices. Details are not described herein again.

In a possible embodiment, the second message carries third indication information, where the third indication information indicates that an access network can be modified. In other words, the first network element performs step 702 only when the first network element detects that the second message carries the third indication information. According to the possible embodiment, the first network element may determine, based on the third indication information, whether the access network can be modified, so that the first network element can establish a session more flexibly.

In a possible embodiment, after the first network element determines the target access network device from the first access network device and the second access network device based on the information about the access network devices, the first network element may store an association relationship between the identifier of the session and first information, where the association relationship is used by the first network element to send information associated with the session to the target access network device. In this way, when the first network element subsequently needs to send the information associated with the session to the target access network device, the first network element can find the target access network device based on the association relationship, and send the information associated with the session to the target access network device.

For descriptions of the information associated with the session, refer to the descriptions in the embodiment corresponding to FIG. 6. Details are not described herein again.

The first information is information that may be for distinguishing the target access network device. For example, the first information is an identifier of the target access network device. Alternatively, the first information is a radio access technology type supported by the target access network device, and the radio access technology type supported by the first access network device is different from the radio access technology type supported by the second access network device. For related descriptions of the first information and the identifier of the target access network device, refer to the descriptions in the embodiment corresponding to FIG. 6. Details are not described herein again. For a specific instance in which the first network element sends, based on the association relationship, the information associated with the session to the target access network device, refer to the descriptions in the embodiment corresponding to FIG. 6. Details are not described herein again.

Optionally, the first network element may further store an association relationship between the identifier of the session and an access type supported by the target access network device. It should be understood that the first network element not only needs to store the association relationship between the identifier of the session and the access type supported by the target access network device, but also needs to store the association relationship between the identifier of the session and the first information (the identifier of the target access network device/the radio access technology type supported by the target access network device).

The following describes three possible implementations of storing the association relationship between the identifier of the session and the first information.
1. The first network element stores the association relationship between the identifier of the session and the first information if the UE is connected to the first network element via the first access network device and the second access network device.
   The first possible implementation for storing the association relationship between the identifier of the session and the first information is the same as that described in the embodiment corresponding to FIG. 6. For details, refer to the descriptions in the first possible implementation for storing the association relationship between the identifier of the session and the first information in the embodiment corresponding to FIG. 6. Details are not described herein again.
2. The first network element stores the association relationship between the identifier of the session and the first information if the UE supports connections to a network via two 3GPP access network devices or the network allows the UE to connect via two 3GPP access network devices. In this way, the target access network device corresponding to the session can be accurately identified subsequently, and the information associated with the session can be sent to the target access network device.
   The second possible implementation for storing the association relationship between the identifier of the session and the first information is the same as that described in the embodiment corresponding to FIG. 6. For details, refer to the descriptions in the second possible implementation for storing the association relationship between the identifier of the session and the first information in the embodiment corresponding to FIG. 6. Details are not described herein again.
3. The first network element stores the association relationship between the identifier of the session and the first information when the access type supported by the target access network device is the 3GPP access type.

The third possible implementation for storing the association relationship between the identifier of the session and the first information is the same as that described in the embodiment corresponding to FIG. 6. For details, refer to the descriptions in the third possible implementation for storing the association relationship between the identifier of the session and the first information in the embodiment corresponding to FIG. 6. Details are not described herein again.

703: The first network element sends a third message to the target access network device, where the third message is for requesting the target access network device to allocate an air interface resource to the session. Correspondingly, the target access network device may receive the third message.

For example, the third message may be a PDU session resource configuration (PDU Session Resource Setup) message. The message includes the identifier of the session.

In another possible embodiment, the first network element sends a third message to the UE via the target access network device, where the third message indicates that session establishment is accepted. For example, the third message may be a PDU session establishment accept (PDU Session Establishment Accept) message.

It can be learned that, according to the method described in FIG. 7, when the UE accesses the network via two 3GPP access network devices, if the service data flow needs to be transmitted via a 3GPP access network device, the first network element may properly select, based on information about the two 3GPP access network devices, one of the two 3GPP access network devices for transmission of the service data flow.

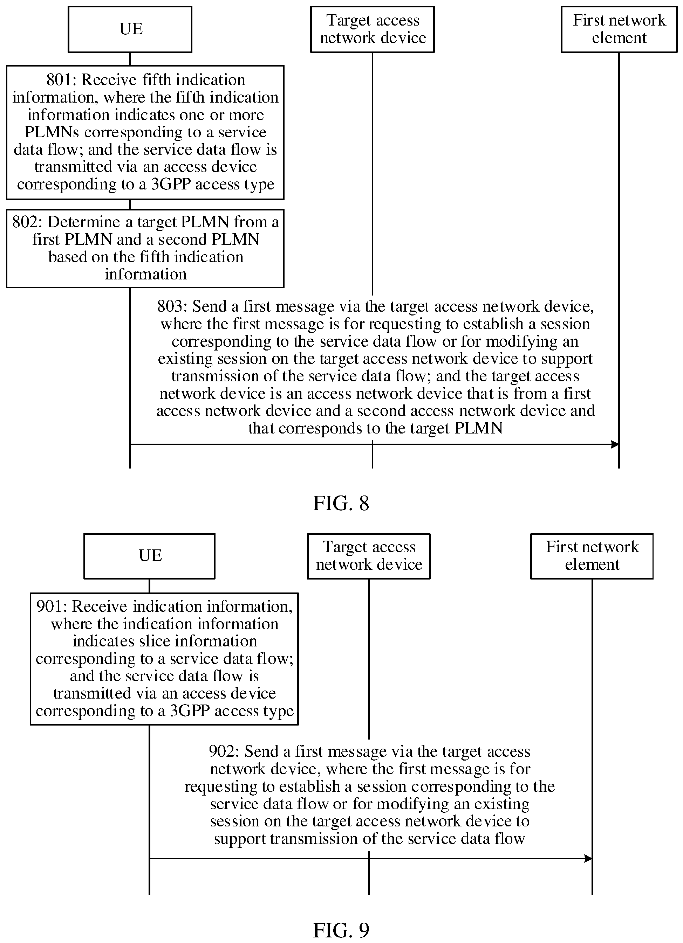

FIG. 8 is a schematic flowchart of a session processing method according to an embodiment of this application. The method described in FIG. 8 may be applied to the application scenario 3 described above.

801: A UE receives fifth indication information, where the fifth indication information indicates one or more PLMNs corresponding to a service data flow; and the service data flow is to be transmitted via an access device corresponding to a 3GPP access type.

In this embodiment of this application, the UE may receive, via a first access network device, the fifth indication information sent by a first network element 1, and a second network element 1 may receive the fifth indication information from a PCF or a UDM. Alternatively, the UE may receive, via a second access network device, the fifth indication information sent by a first network element 2, and a second network element 2 may receive the fifth indication information from a PCF or a UDM.

In this embodiment of this application, the PLMN corresponding to the service data flow is a PLMN needed for transmission of the service data flow, or means that the service data flow is to be transmitted via the PLMN.

The following describes several possible representation forms of the fifth indication information.
1. The fifth indication information is policy information, where the policy information indicates that the service data flow is to be transmitted via the access device corresponding to the 3GPP access type, and indicates the one or more PLMNs corresponding to the service data flow.

Optionally, the policy information may be a URSP. Alternatively, the policy information may have another name. This is not limited in embodiments of this application.

For example, the policy information indicates one PLMN corresponding to the service data flow. The policy information includes "service data flow→3GPP Access+PLMN 1", indicating that the service data flow needs to be transmitted via the access network device corresponding to the 3GPP access type, and the service data flow needs to be transmitted via the PLMN 1.

For example, the policy information indicates two PLMNs corresponding to the service data flow. The policy information includes "service data flow→3GPP Access+PLMN 1+PLMN 2", indicating that the service data flow needs to be transmitted via the access network device corresponding to the 3GPP access type, and the service data flow needs to be transmitted via the PLMN 1 or the PLMN 2.

2. The fifth indication information includes an association relationship between the service data flow and the one or more PLMNs, and policy information corresponding to each of the one or more PLMNs, where the policy information indicates that the service data flow is to be transmitted via the access device corresponding to the 3GPP access type.

For example, the fifth indication information indicates one PLMN corresponding to the service data flow. The fifth indication information includes an association relationship between the service data flow and a PLMN 1, and policy information corresponding to the PLMN 1. The policy information includes "service data flow→3GPP Access+slice 1".

For another example, that the fifth indication information indicates two PLMNs corresponding to the service data flow. The fifth indication information includes an association relationship between the service data flow, and a PLMN 1 and a PLMN 2, policy information corresponding to the PLMN 1, and policy information corresponding to the PLMN 2. The policy information corresponding to the PLMN 1 includes "service data flow→3GPP Access+slice 1". The policy information corresponding to the PLMN 2 includes "service data flow→3GPP Access+slice 2". For example, it is assumed that the UE selects the PLMN 1 in the PLMN 1 and the PLMN 2. In this case, the UE determines the policy information corresponding to the PLMN 1, and determines the policy information corresponding to the PLMN 1 as to-be-used policy information.

3. The fifth indication information includes an association relationship between slice information and the one or more PLMNs, and policy information, where the policy information indicates that the service data flow is to be transmitted via the access device corresponding to the 3GPP access type, and indicates slice information corresponding to the service data flow.

For example, the fifth indication information indicates one PLMN corresponding to the service data flow. The fifth indication information includes an association relationship between a slice 1 and a PLMN 1, and policy information. The policy information includes "service data flow→3GPP Access+slice 1". The UE can determine, based on the policy information and the association relationship between the slice 1 and the PLMN 1, that the service data flow corresponds to the PLMN 1, that is, the service data flow needs to be transmitted via the PLMN 1.

For example, the fifth indication information indicates two PLMNs corresponding to the service data flow. The fifth indication information includes an association relationship between a slice 1 and a PLMN 1, an association relationship between the slice 1 and a PLMN 2, and policy information. The policy information includes "service data flow→3GPP Access+slice 1". The UE can determine, based on the policy information, the association relationship between the slice 1 and the PLMN 1, and the association relationship between the slice 1 and the PLMN 2, that the service data flow corresponds to the PLMN 1 and the PLMN 2, that is, the service data flow needs to be transmitted via the PLMN 1 or the PLMN 2.

In a possible embodiment, before the UE receives the fifth indication information, the UE further sends sixth indication information, where the sixth indication information indicates that the UE supports connections to a network via two 3GPP access network devices, and the sixth indication information is for generating the fifth indication information. That the UE is connected to a first network element via the first access network device and the second access network device indicates that the UE supports connections to two 3GPP access network devices, or the UE supports simultaneous connections to two 3GPP access network devices. According to the possible embodiment, the fifth indication information may be generated more flexibly based on an actual requirement.

For example, the UE may send the sixth indication information to the first network element over an access network, and the first network element sends the sixth indication information to the PCF/UDM. After receiving the sixth indication information, the PCF/UDM generates the fifth indication information based on the sixth indication information. For example, only when the UE supports connections to the network via two 3GPP access network devices, the PCF or the UDM generates the fifth indication information for the UE, and sends the fifth indication information to the first network element.

802: The UE determines a target PLMN from a first PLMN and a second PLMN based on the fifth indication information.

In a possible embodiment, the fifth indication information indicates one PLMN corresponding to the service data flow, and the target PLMN is the PLMN corresponding to the service data flow. For example, if the fifth indication information indicates only the first PLMN, the target PLMN is the first PLMN.

In a possible embodiment, the fifth indication information indicates a plurality of PLMNs corresponding to the service data flow, the fifth indication information further includes priorities of the plurality of PLMNs, and the target PLMN is determined in the plurality of PLMNs based on the priorities of the plurality of PLMNs corresponding to the service data flow. For example, the UE may determine whether to use a PLMN in descending order of PLMN priorities. If the UE has accessed the PLMN, the UE sends a first message via a 3GPP access network device in the PLMN. If the UE does not access the PLMN, a cell discovery and selection procedure may be triggered so that the UE accesses the PLMN. If the UE cannot access the PLMN, the UE attempts to access a PLMN with a next priority. According to the possible embodiment, when the service data flow corresponds to the plurality of PLMNs, one of the PLMNs may be properly selected for transmission of the service data flow.

803: The UE sends the first message via a target access network device, where the first message is for requesting to establish a session corresponding to the service data flow or for modifying an existing session on the target access network device to support transmission of the service data flow; and the target access network device is an access network device that is from the first access network device and the second access network device and that corresponds to the target PLMN. Correspondingly, the first network element connected to the target access network device may receive the first message.

In this embodiment of this application, the access network device corresponding to the target PLMN is an access network device located in the target PLMN or an access network device belonging to the target PLMN.

In this embodiment of this application, that the first message is for requesting to establish the session corresponding to the service data flow or for modifying the existing session on the target access network device to support transmission of the service data flow means that the first message is for requesting to establish or modify a transmission channel, a communication channel, or a transmission path for the service data flow.

In this embodiment of this application, if no session meeting a transmission requirement of the service data flow is established on the target access network device, the UE may send, via the target access network device, the first message to the first network element connected to the target access network device, where the first message is for requesting to establish the session corresponding to the service data flow, so that the session can be established on the target access network device, and the service data flow can be subsequently transmitted via the target access network device. The first message may be a PDU session establishment (PDU Session Establishment) request message. If a session meeting the transmission requirement of the service data flow has been established on the target access network device, the UE may send, via the target access network device, the first message to the first network element connected to the target access network device, where the first message is for modifying the existing session on the target access network device to support transmission of the service data flow, in other words, the service data flow is associated with the existing session on the target access network device, so that the service data flow can be subsequently transmitted via the target access network device. The first message may be a PDU session modification (PDU Session Modification) request message, and the message includes information about the service data flow. For example, the transmission requirement of the service data flow may be a slice requirement, a radio access technology type requirement, a service type requirement, a transmission performance requirement, or the like of the service data flow.

In this embodiment of this application, the session may be a PDU session, or may have another session name. This is not limited in embodiments of this application.

It can be learned that, according to the method described in FIG. 8, when the UE accesses the network via two 3GPP access network devices, if the service data flow needs to be transmitted via a 3GPP access network device, the UE may properly select, based on a PLMN needed for transmission of the service data flow, one of the two 3GPP access network devices for transmission of the service data flow.

FIG. 9 is a schematic flowchart of a session processing method according to an embodiment of this application. The method described in FIG. 9 may be applied to the application scenario 3 described above.

901: A UE receives indication information, where the indication information indicates slice information corresponding to a service data flow; and the service data flow is to be transmitted via an access device corresponding to a 3GPP access type.

The slice information corresponding to the service data flow indicates a slice needed for transmission of the service data flow.

Optionally, the indication information may be policy information, for example, a URSP. For example, the policy information includes "service data flow→3GPP Access+slice 1", indicating that the service data flow needs to be transmitted via the access network device corresponding to the 3GPP access type, and the service data flow needs to be carried and transmitted by using the slice 1.

The policy information may be generated by a core network device. For example, the policy information may be generated by a PCF network element. For example, the PCF network element may generate the policy information based on capability information of the UE and/or subscription information of the UE. After generating the policy information, the PCF may send the policy information to a first network element, and the first network element sends the policy information to the UE over the access network.

902: The UE sends a first message via a target access network device, where the first message is for requesting to establish a session corresponding to the service data flow or for modifying an existing session on the target access network device to support transmission of the service data flow.

The target access network device is an access network device that is from a first access network device and a second access network device and that corresponds to a target PLMN. The target PLMN is a PLMN that is from a first PLMN and a second PLMN and that supports the slice information corresponding to the service data flow, or the target PLMN is a PLMN that is from the first PLMN and the second PLMN and that allows the UE to use the slice information corresponding to the service data flow. Correspondingly, the first network element connected to the target access network device may receive the first message.

In this embodiment of this application, if no session meeting a transmission requirement of the service data flow is established on the target access network device, the UE may send, via the target access network device, the first message to the first network element connected to the target access network device, where the first message is for requesting to establish the session corresponding to the service data flow, so that the session can be established on the target access network device, and the service data flow can be subsequently transmitted via the target access network device. The first message may be a PDU session establishment (PDU Session Establishment) request message. If a session meeting the transmission requirement of the service data flow has been established on the target access network device, the UE may send, via the target access network device, the first message to the first network element connected to the target access network device, where the first message is for modifying the existing session on the target access network device to support transmission of the service data flow, in other words, the service data flow is associated with the existing session on the target access network device, so that the service data flow can be subsequently transmitted via the target access network device. The first message may be a PDU session modification (PDU Session Modification) request message, and the message includes information about the service data flow. For example, the transmission requirement of the service data flow may be a slice requirement, a radio access technology type requirement, a service type requirement, a transmission performance requirement, or the like of the service data flow.

For example, if a slice corresponding to the service data flow is a slice 1, a slice supported by the first PLMN is the slice 1, and a slice supported by the second PLMN is a slice 2, the target PLMN is the first PLMN. A slice supported by a PLMN may be Configured NSSAI (network slice selection assistance information, Network Slice Selection Assistance Information).

For another example, if a slice corresponding to the service data flow is a slice 1, a slice that the first PLMN allows the UE to use is the slice 1, and a slice that the second PLMN allows the UE to use is a slice 2, the target PLMN is the first PLMN. A slice that a PLMN allows the UE to use may be Allowed NSSAI.

In a possible embodiment, the UE determines the target PLMN based on the indication information and second information, where the second information includes one or more of the following: slice information supported/not supported by the first PLMN, slice information supported/not supported by the second PLMN, slice information that the first PLMN allows/does not allow the UE to use, and slice information that the second PLMN allows/does not allow the UE to use.

Optionally, the UE may obtain, from a first network element in the first PLMN, the slice information that the first PLMN allows/does not allow the UE to use, and the UE may obtain, from a first network element in the second PLMN, the slice information that the second PLMN allows/does not allow the UE to use.

Optionally, the UE may obtain, from a first network element in the first PLMN, the slice information supported/not supported by the first PLMN, or the UE receives a broadcast message of an access network device in the first PLMN, where the broadcast message includes a slice supported/not supported by the first PLMN; and the UE may obtain, from a first network element in the second PLMN, the slice information supported/not supported by the second PLMN, or the UE receives a broadcast message of an access network device in the second PLMN, where the broadcast message includes a slice supported/not supported by the second PLMN.

If the second information includes the slice information not supported by the first PLMN and the slice information not supported by the second PLMN, the UE may exclude the slice information not supported by the first PLMN, to obtain the slice information supported by the first PLMN. Similarly, the UE may exclude the slice information not supported by the second PLMN, to obtain the slice information supported by the second PLMN. Then, the UE determines the target PLMN from the first access network device and the second access network device based on the slice information supported by the first PLMN, the slice information supported by the second PLMN, and the slice information corresponding to the service data flow.

If the second information includes the slice information that the first PLMN does not allow the UE to use and the slice information that the second PLMN does not allow the UE to use, the UE may exclude the slice information that the first PLMN does not allow the UE to use, to obtain the slice information that the first PLMN allows the UE to use. Similarly, the UE may exclude the slice information that the second PLMN does not allow the UE to use, to obtain the slice information that the second PLMN allows the UE to use. Then, the UE determines the target PLMN from the first access network device and the second access network device based on the slice information that the first PLMN allows the UE to use, the slice information that the second PLMN allows the UE to use, and the slice information corresponding to the service data flow.

In a possible embodiment, if both the first PLMN and the second PLMN support the slice information corresponding to the service data flow, or both the first PLMN and the second PLMN allow the UE to use the slice information corresponding to the service data flow, the UE determines the target PLMN based on a PLMN priority, where the PLMN priority is a PLMN priority corresponding to the service data flow or a PLMN priority corresponding to the UE. According to the possible embodiment, when a plurality of PLMNs all support the slice information corresponding to the service data flow, one of the PLMNs may be properly selected for transmission of the service data flow.

Optionally, the UE may obtain, from the first network element, the PLMN priority corresponding to the service data flow, and the first network element may obtain, from the PCF or a UDM, the PLMN priority corresponding to the service data flow.

The PLMN priority corresponding to the UE is a priority for network selection of the UE. Optionally, the UE may obtain, from the UDM, the PLMN priority corresponding to the UE.

For example, if both the first PLMN and the second PLMN support the slice information corresponding to the service data flow or both the first PLMN and the second PLMN allow the UE to use the slice information corresponding to the service data flow, and a priority of the first PLMN is higher than a priority of the second PLMN, the first PLMN is the target PLMN.

It can be learned that, according to the method described in FIG. 9, when the UE accesses the network via two 3GPP access network devices, if the service data flow needs to be transmitted via a 3GPP access network device, the UE may properly select, based on a slice needed for transmission of the service data flow, one of the two 3GPP access network devices for transmission of the service data flow.

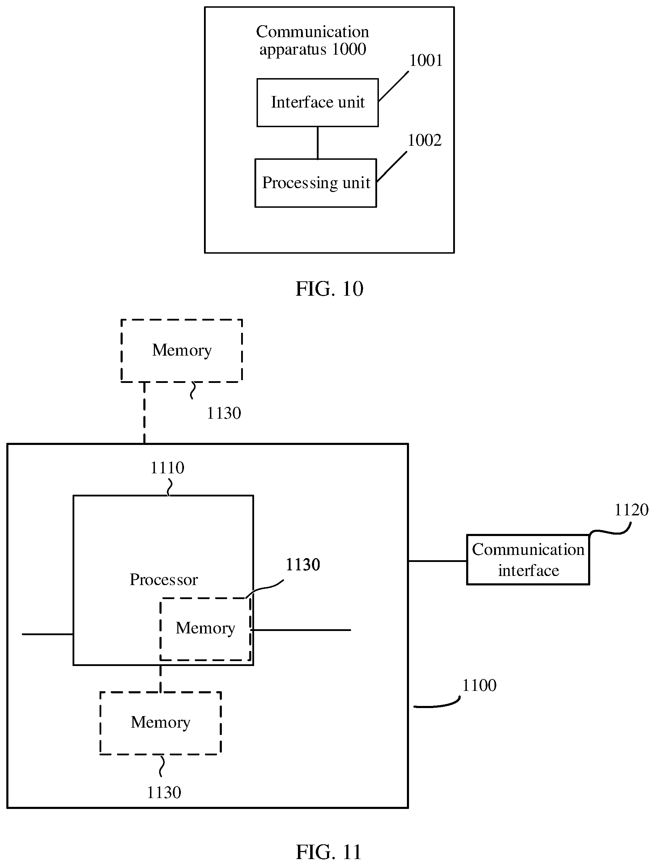

This application provides a communication apparatus, which may be configured to implement a function of the UE or the first network element. The communication apparatus may be the UE or the first network element. The communication apparatus includes modules or units that are in one-to-one correspondence with the methods/operations/steps/actions performed by the UE or the first network element in the foregoing method embodiments. The unit may be implemented by a hardware circuit, software, or a combination of a hardware circuit and software. FIG. 10 is a diagram of a structure of a communication apparatus 1000 according to an embodiment of this application. The communication apparatus 1000 may include an interface unit 1001 and a processing unit 1002. Specifically, the processing unit 1002 is configured to process signaling and/or data, where the signaling and/or data may be data received by the interface unit 1001, and processed signaling and/or data may also be sent by the interface unit 1001.

In an implementation, when the communication apparatus 1000 is the UE, the UE accesses a network via access network devices, where the access network devices include a first access network device and a second access network device, and the first access network device and the second access network device are of a 3rd generation partnership project 3GPP access type.

The interface unit 1001 is configured to receive policy information, where the policy information indicates that a service data flow is to be transmitted via an access network device corresponding to the 3GPP access type.

The processing unit 1002 is configured to determine, by the UE, a target access network device from the first access network device and the second access network device based on information about the access network devices.

The interface unit 1001 is further configured to send a first message via the target access network device, where the first message is for requesting to establish a session corresponding to the service data flow or for modifying an existing session on the target access network device to support transmission of the service data flow.

In a possible embodiment, the information about the access network devices includes one or more of the following: an air interface signal status between the access network device and the UE, load information of the access network device, slice information supported by the access network device, a radio access technology supported by the access network device, a service type supported by the access network device, and frequency information supported by the access network device.

In a possible embodiment, the information about the access network devices includes the slice information supported by the access network device; the policy information further indicates the slice information corresponding to the service data flow; and the target access network device is an access network device that is from the first access network device and the second access network device and that supports the slice information corresponding to the service data flow.

In a possible embodiment, the information about the access network devices includes the radio access technology type supported by the access network device; the policy information further indicates a radio access technology type corresponding to the service data flow; and the target access network device is an access network device that is from the first access network device and the second access network device and that supports the radio access technology type corresponding to the service data flow.

In a possible embodiment, the interface unit 1001 is further configured to send first indication information before receiving the policy information, where the first indication information indicates that the UE supports connections to the network via two 3GPP access network devices, and the first indication information is for generating the policy information.

In a possible embodiment, the interface unit 1001 is further configured to receive second indication information, where the second indication information indicates a radio access technology type that supports a first service or a radio access technology type that does not support the first service,
where
the service data flow is a data flow of the first service; the information about the access network devices includes the radio access technology type supported by the access network device; and the target access network device is an access network device that is from the first access network device and the second access network device and whose radio access technology type supports the first service.

In a possible embodiment, the service data flow is a data flow of a first service; the information about the access network devices includes the service type supported by the access network device; and the target access network device is an access network device that is from the first access network device and the second access network device and that supports the first service.

In a possible embodiment, the first service is an emergency service or a voice service.

In an implementation, when the communication apparatus 1000 is the first network element, a UE accesses a network via access network devices, where the access network devices include a first access network device and a second access network device, the first access network device and the second access network device are of a 3rd generation partnership project 3GPP access type, and the network includes the first network element.

The interface unit 1001 is configured to receive a first message sent by the UE via a target access network device, where the first message is for requesting to establish a session corresponding to a service data flow or for modifying an existing session on the target access network device to support transmission of the service data flow; the service data flow is to be transmitted via an access device corresponding to the 3GPP access type; and the target access network device is one of the first access network device and a second access network device.

The processing unit 1002 is configured to store an association relationship between an identifier of the session and first information, where the association relationship is used by the first network element to send information associated with the session to the target access network device; and the first information is an identifier of the target access network device; or the first information is a radio access technology supported by the target access network device, and a radio access technology type supported by the first access network device is different from a radio access technology type supported by the second access network device.

In a possible embodiment, the interface unit 1001 is further configured to receive the identifier of the session and the information associated with the session that are sent by a second network element; and send, based on the association relationship, the information associated with the session to the target access network device.

In a possible embodiment, that the processing unit 1002 stores the association relationship between the identifier of the session and the first information includes:
storing the association relationship between the identifier of the session and the first information if the UE is connected to the first network element via the first access network device and the second access network device.

In a possible embodiment, that the processing unit 1002 stores the association relationship between the identifier of the session and the first information includes:
storing the association relationship between the identifier of the session and the first information if the UE supports connections to the network via two 3GPP access network devices or the network allows the UE to connect via two 3GPP access network devices.

In a possible embodiment, the identifier of the target access network device is a cell identifier corresponding to the target access network device, or the identifier of the target access network device is an identifier allocated by the target access network device to the UE in a connection between the target access network device and the first network element.

In an implementation, when the communication apparatus 1000 is the first network element, a UE accesses a network via access network devices, where the access network devices include a first access network device and a second access network device, the first access network device and the second access network device are of a 3rd generation partnership project 3GPP access type, and the network includes the first network element.

The interface unit 1001 is configured to receive a second message sent by the UE via the first access network device or the second access network device, where the second message is for requesting to establish a session corresponding to a service data flow; and the service data flow is to be transmitted via an access device corresponding to the 3GPP access type.

The processing unit 1002 is configured to determine a target access network device from the first access network device and the second access network device based on information about the access network devices.

The interface unit 1001 is further configured to send a third message to the target access network device, where the third message is for requesting the target access network device to allocate an air interface resource to the session.

In a possible embodiment, the information about the access network devices includes one or more of the following: an air interface signal status between the access network device and the UE, load information of the access network device, slice information supported by the access network device, a radio access technology supported by the access network device, a service type supported by the access network device, and frequency information supported by the access network device.

In a possible embodiment, the information about the access network devices includes the slice information supported by the access network device; and the target access network device is an access network device that is from the first access network device and the second access network device and that supports a slice corresponding to the service data flow.

In a possible embodiment, the information about the access network devices includes the radio access technology type supported by the access network device; and the target access network device is an access network device that is from the first access network device and the second access network device and that supports a radio access technology type corresponding to the service data flow.

In a possible embodiment, the service data flow is a data flow of a first service; the information about the access network devices includes the radio access technology type supported by the access network device; and the target access network device is an access network device that is from the first access network device and the second access network device and whose radio access technology type supports the first service.

In a possible embodiment, the service data flow is a data flow of a first service; the information about the access network devices includes the service type supported by the access network device; and the target access network device is an access network device that is from the first access network device and the second access network device and that supports the first service.

In a possible embodiment, the first service is an emergency service or a voice service.

In a possible embodiment, the second message carries third indication information, where the third indication information indicates that an access network can be modified.

In a possible embodiment, that the processing unit 1002 determines the target access network device from the first access network device and the second access network device based on the information about the access network devices includes: sending the information about the access network devices to a second network element; and receiving fourth indication information sent by the second network element, where the fourth indication information indicates the target access network device configured to establish a session.

In a possible embodiment, the processing unit 1002 is further configured to store an association relationship between an identifier of the session and first information, where the association relationship is used by the first network element to send information associated with the session to the target access network device; and the first information is an identifier of the target access network device; or the first information is a radio access technology type supported by the target access network device, and a radio access technology type supported by the first access network device is different from a radio access technology type supported by the second access network device.

In a possible embodiment, the identifier of the target access network device is a cell identifier corresponding to the target access network device, or the identifier of the target access network device is an identifier allocated by the target access network device to the UE in a connection between the target access network device and the first network element.

In an implementation, when the communication apparatus 1000 is the UE, in a scenario in which the UE accesses a network via access network devices, the access network devices include a first access network device and a second access network device, the first access network device is a 3GPP access network device in a first public land mobile network PLMN, the second access network device is a 3GPP access network device in a second PLMN, and the first PLMN is different from the second PLMN.

The interface unit 1001 is configured to receive fifth indication information, where the fifth indication information indicates one or more PLMNs corresponding to a service data flow; and the service data flow is to be transmitted via an access device corresponding to a 3GPP access type.

The processing unit 1002 is configured to determine a target PLMN from the first PLMN and the second PLMN based on the fifth indication information.

The interface unit 1001 is further configured to send a first message via a target access network device, where the first message is for requesting to establish a session corresponding to the service data flow or for modifying an existing session on the target access network device to support transmission of the service data flow; and the target access network device is an access network device that is from the first access network device and the second access network device and that corresponds to the target PLMN.

In a possible embodiment, the fifth indication information is policy information, where the policy information indicates that the service data flow is to be transmitted via the access device corresponding to the 3GPP access type, and indicates the one or more PLMNs corresponding to the service data flow.

In a possible embodiment, the fifth indication information includes an association relationship between the service data flow and the one or more PLMNs, and policy information corresponding to each of the one or more PLMNs, where the policy information indicates that the service data flow is to be transmitted via the access device corresponding to the 3GPP access type.

In a possible embodiment, the fifth indication information includes an association relationship between slice information and the one or more PLMNs, and policy information, where the policy information indicates that the service data flow is to be transmitted via the access device corresponding to the 3GPP access type, and indicates slice information corresponding to the service data flow.

In a possible embodiment, the fifth indication information indicates one PLMN corresponding to the service data flow, and the target PLMN is the PLMN corresponding to the service data flow.

In a possible embodiment, the fifth indication information indicates a plurality of PLMNs corresponding to the service data flow, the fifth indication information further includes priorities of the plurality of PLMNs, and the target PLMN is determined in the plurality of PLMNs based on the priorities of the plurality of PLMNs corresponding to the service data flow.

In a possible embodiment, the interface unit 1001 is further configured to send sixth indication information before receiving the fifth indication information, where the sixth indication information indicates that the UE supports connections to the network via two 3GPP access network devices, and the sixth indication information is for generating the fifth indication information.

In an implementation, when the communication apparatus 1000 is the UE, in a scenario in which the UE accesses a network via access network devices, the access network devices include a first access network device and a second access network device, the first access network device is a 3GPP access network device in a first public land mobile network PLMN, the second access network device is a 3GPP access network device in a second PLMN, and the first PLMN is different from the second PLMN.

The interface unit 1001 is configured to receive indication information, where the indication information indicates slice information corresponding to a service data flow; and the service data flow is to be transmitted via an access device corresponding to a 3GPP access type.

The interface unit 1001 is further configured to send a first message via a target access network device, where the first message is for requesting to establish a session corresponding to the service data flow or for modifying an existing session on the target access network device to support transmission of the service data flow; the target access network device is an access network device that is from the first access network device and the second access network device and that corresponds to a target PLMN; and the target PLMN is a PLMN that is from the first PLMN and the second PLMN and that supports the slice information corresponding to the service data flow, or the target PLMN is a PLMN that is from the first PLMN and the second PLMN and that allows the UE to use the slice information corresponding to the service data flow.

In a possible embodiment, the processing unit 1002 is configured to determine the target PLMN based on the indication information and second information.

In a possible embodiment, the processing unit 1002 is configured to: if both the first PLMN and the second PLMN support the slice information corresponding to the service data flow, or both the first PLMN and the second PLMN allow the UE to use the slice information corresponding to the service data flow, determine the target PLMN based on a PLMN priority, where the PLMN priority is a PLMN priority corresponding to the service data flow or a PLMN priority corresponding to the UE.

As shown in FIG. 11, a communication apparatus 1100 according to an embodiment of this application is configured to implement a function of the UE or the first network element. The apparatus may be a communication device or an apparatus used in the communication device. The communication device may be the UE or the first network element. The apparatus used in the communication device may be a chip system or a chip in the communication device. The chip system may include a chip, or may include a chip and another discrete device.

The communication apparatus 1100 includes at least one processor 1110, configured to implement a processing function of a device (for example, the UE or the first network element) in the method provided in embodiments of this application. The communication apparatus 1100 may further include a communication interface 1120, configured to implement a receiving and sending operation of a device (for example, the UE or the first network element) in the method provided in embodiments of this application. In embodiments of this application, the communication interface may be a transceiver, a circuit, a bus, a module, or another type of communication interface, and is configured to communicate with another device through a transmission medium. For example, the communication interface 1120 is used by an apparatus in the communication apparatus 1100 to communicate with another device. The processor 1110 receives and sends data through the communication interface 1120, and is configured to implement the method in the foregoing method embodiments.

The communication apparatus 1100 may further include at least one memory 1130, configured to store program instructions and/or data. The memory 1130 is coupled to the processor 1110. The coupling in this embodiment of this application may be an indirect coupling or a communication connection between apparatuses, units, or modules in an electrical form, a mechanical form, or another form, and is used for information exchange between the apparatuses, the units, or the modules. The processor 1110 and the memory 1130 may operate cooperatively. The processor 1110 may execute the program instructions stored in the memory 1130. At least one of the at least one memory may be included in the processor.

In this embodiment of this application, a specific connection medium between the communication interface 1120, the processor 1110, and the memory 1130 is not limited. In this embodiment of this application, in FIG. 11, the memory 1130, the processor 1110, and the communication interface 1120 are connected through a bus. The bus is represented by a bold line in FIG. 11. A connection manner between other components is for illustration purposes, and is not limited thereto. The bus may be classified into an address bus, a data bus, a control bus, and the like. For ease of representation, only one bold line is used to represent the bus in FIG. 11, but this does not mean that there is only one bus or only one type of bus.

When the communication apparatus 1100 is specifically an apparatus used in a device (for example, the UE or the first network element), for example, when the communication apparatus 1100 is specifically a chip or a chip system, the communication interface 1120 may output or receive a baseband signal. When the communication apparatus 1100 is specifically a device (for example, the UE or the first network element), the communication interface 1120 may output or receive a radio frequency signal. In embodiments of this application, the processor may be a general-purpose processor, a digital signal processor, an application-specific integrated circuit, a field programmable gate array or another programmable logic component, a discrete gate or transistor logic component, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

It should be noted that the communication interface 1120 may be configured to perform a function of the interface unit 1001, and the processor 1110 may be configured to perform a function of the processing unit 1002. Details are not described herein again.

When the communication apparatus is a chip used in the UE or the first network element, the chip implements a function of the UE or the first network element in the foregoing method embodiments, and the chip receives information from another network element; or the chip sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a core network device or a terminal. Certainly, the processor and the storage medium may alternatively exist in the UE or the first network element as discrete components.

All or a part of the foregoing embodiments may be implemented by using software, hardware, firmware, or any combination thereof. When software is used to implement the technical solutions, all or a part of the technical solutions may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk drive, or a magnetic tape; may be an optical medium, for example, a DVD; or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

An embodiment of this application further provides a computer-readable storage medium. The computer-readable storage medium stores computer-executable instructions. When the computer-executable instructions are executed, the method performed by the UE or the first network element in the foregoing method embodiments is implemented.

An embodiment of this application further provides a computer program product. The computer program product includes a computer program. When the computer program is executed, the method performed by the UE or the first network element in the foregoing method embodiments is implemented.

An embodiment of this application further provides a communication system. The communication system includes a UE and a first network element. The UE is configured to perform the method performed by the UE in the foregoing method embodiments. The first network element is configured to perform the method performed by the first network element in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some or all of technical features thereof, without departing from the scope of the technical solutions in embodiments of this application.

## Claims

1. A session processing method, applied to a scenario in which a user equipment UE accesses a network via access network devices, wherein the access network devices comprise a first access network device and a second access network device, the first access network device and the second access network device are of a 3rd generation partnership project 3GPP access type, and the method comprises:
receiving, by the UE, policy information, wherein the policy information indicates that a service data flow is to be transmitted via an access network device corresponding to the 3GPP access type;
determining, by the UE, a target access network device from the first access network device and the second access network device based on information about the access network devices; and
sending, by the UE, a first message via the target access network device, wherein the first message is for requesting to establish a session corresponding to the service data flow or for modifying an existing session on the target access network device to support transmission of the service data flow.

2. The method according to claim 1, wherein
the information about the access network devices comprises one or more of the following: an air interface signal status between the access network device and the UE, load information of the access network device, slice information supported by the access network device, a radio access technology type supported by the access network device, a service type supported by the access network device, and frequency information supported by the access network device.

3. The method according to claim 2, wherein the information about the access network devices comprises the slice information supported by the access network device; the policy information further indicates the slice information corresponding to the service data flow; and
the target access network device is an access network device that is from the first access network device and the second access network device and that supports the slice information corresponding to the service data flow.

4. The method according to claim 2, wherein the information about the access network devices comprises the radio access technology type supported by the access network device; the policy information further indicates a radio access technology type corresponding to the service data flow; and
the target access network device is an access network device that is from the first access network device and the second access network device and that supports the radio access technology type corresponding to the service data flow.

5. The method according to claim 4, wherein before the receiving, by the user equipment UE, the policy information, the method further comprises:
sending, by the UE, first indication information, wherein the first indication information indicates that the UE supports connections to the network via two 3GPP access network devices, and the first indication information is for generating the policy information.

6. The method according to claim 2, wherein the method further comprises:
receiving second indication information, wherein the second indication information indicates a radio access technology type that supports a first service or a radio access technology type that does not support the first service,
wherein
the service data flow is a data flow of the first service; the information about the access network devices comprises the radio access technology type supported by the access network device; and the target access network device is an access network device that is from the first access network device and the second access network device and whose radio access technology type supports the first service.

7. The method according to claim 2, wherein the service data flow is a data flow of a first service; the information about the access network devices comprises the service type supported by the access network device; and
the target access network device is an access network device that is from the first access network device and the second access network device and that supports the first service.

8. The method according to claim 6 or 7, wherein the first service is an emergency service or a voice service.

9. A session processing method, applied to a scenario in which a user equipment UE accesses a network via access network devices, wherein the access network devices comprise a first access network device and a second access network device, the first access network device and the second access network device are of a 3rd generation partnership project 3GPP access type, the network comprises a first network element, and the method comprises:
receiving, by the first network element, a first message sent by the UE via a target access network device, wherein the first message is for requesting to establish a session corresponding to a service data flow or for modifying an existing session on the target access network device to support transmission of the service data flow; the service data flow is to be transmitted via an access device corresponding to the 3GPP access type; and the target access network device is one of the first access network device and the second access network device; and
storing, by the first network element, an association relationship between an identifier of the session and first information, wherein the association relationship is used by the first network element to send information associated with the session to the target access network device; and the first information is an identifier of the target access network device; or the first information is a radio access technology supported by the target access network device, and a radio access technology type supported by the first access network device is different from a radio access technology type supported by the second access network device.

10. The method according to claim 9, wherein the method further comprises:
receiving, by the first network element, the identifier of the session and the information associated with the session that are sent by a second network element; and
sending, by the first network element based on the association relationship, the information associated with the session to the target access network device.

11. The method according to claim 9 or 10, wherein the storing, by the first network element, the association relationship between the identifier of the session and the first information comprises:
storing, by the first network element, the association relationship between the identifier of the session and the first information if the UE is connected to the first network element via the first access network device and the second access network device.

12. The method according to claim 9 or 10, wherein the storing, by the first network element, the association relationship between the identifier of the session and the first information comprises:
storing, by the first network element, the association relationship between the identifier of the session and the first information if the UE supports connections to the network via two 3GPP access network devices or the network allows the UE to connect via two 3GPP access network devices.

13. The method according to any one of claims 9 to 12, wherein the identifier of the target access network device is a cell identifier corresponding to the target access network device, or the identifier of the target access network device is an identifier allocated by the target access network device to the UE in a connection between the target access network device and the first network element.

14. A session processing method, applied to a scenario in which a user equipment UE accesses a network via access network devices, wherein the access network devices comprise a first access network device and a second access network device, the first access network device is a 3rd generation partnership project 3GPP access network device in a first public land mobile network PLMN, the second access network device is a 3GPP access network device in a second PLMN, the first PLMN is different from the second PLMN, and the method comprises:
receiving, by the UE, indication information, wherein the indication information indicates slice information corresponding to a service data flow; and the service data flow is to be transmitted via an access device corresponding to a 3GPP access type; and
sending, by the UE, a first message via a target access network device, wherein the first message is for requesting to establish a session corresponding to the service data flow or for modifying an existing session on the target access network device to support transmission of the service data flow; the target access network device is an access network device that is from the first access network device and the second access network device and that corresponds to a target PLMN; and the target PLMN is a PLMN that is from the first PLMN and the second PLMN and that supports the slice information corresponding to the service data flow, or the target PLMN is a PLMN that is from the first PLMN and the second PLMN and that allows the UE to use the slice information corresponding to the service data flow.

15. The method according to claim 14, wherein the method further comprises:
determining, by the UE, the target PLMN based on the indication information and second information, wherein the second information comprises one or more of the following: slice information supported/not supported by the first PLMN, slice information supported/not supported by the second PLMN, slice information that the first PLMN allows/does not allow the UE to use, and slice information that the second PLMN allows/does not allow the UE to use.

16. The method according to claim 14 or 15, wherein the method further comprises:
if both the first PLMN and the second PLMN support the slice information corresponding to the service data flow, or both the first PLMN and the second PLMN allow the UE to use the slice information corresponding to the service data flow,
determining, by the UE, the target PLMN based on a PLMN priority, wherein the PLMN priority is a PLMN priority corresponding to the service data flow or a PLMN priority corresponding to the UE.

17. A communication apparatus, comprising a unit configured to perform the method according to any one of claims 1 to 16.

18. A communication apparatus, comprising a processor and a memory, wherein the processor is coupled to the memory, and the processor is configured to implement the method according to any one of claims 1 to 16.

19. A chip, comprising a processor and an interface, wherein the processor is coupled to the interface, the interface is configured to receive or output a signal, and the processor is configured to execute code instructions, to cause the method according to any one of claims 1 to 16 to be performed.

20. A computer-readable storage medium, wherein the computer-readable storage medium stores computer-executable instructions, and when the computer-executable instructions are invoked by the computer, the computer is caused to perform the method according to any one of claims 1 to 16.
